# EUROPEAN PATENT APPLICATION

(11) **EP 4 096 157 A1**
(43) Date of publication of application: **30.11.2022**
(21) Application number: 22174708.2
(22) Date of filing: 20.05.2022
(51) Int. Cl.: H04L 9/40, H04L 9/00

(54) **SYSTEMS AND METHODS FOR VALIDATION OF POLICIES OF A SMART CONTRACT ON A CENTRALIZED OR DISTRIBUTED DIGITAL LEDGER**

(30) Priority: 28.05.2021 US 202163194769 P
(71) Applicant: CIVIC TECHNOLOGIES, INC., San Francisco, California 94103 (US)
(72) Inventor: SMITH, Jonathan, San Francisco (US)
(74) Representative: Murgitroyd & Company

(57) **Abstract**

Systems and methods are described for policy-validated transactions using a centralized or distributed ledger. A request to execute a transaction and a transaction signature is received from a user's computing device. The transaction signature is generated with a private key of the user's computing device. The transaction corresponds to a token associated with the user's computing device and the transaction is subject to a first policy of a set of one or more policies. The transaction signature corresponds to the request to execute the transaction is determined using a public key of the user's computing device. In response to the determination, the token associated with the user's computing device is retrieved from the centralized or distributed ledger. The transaction is executed if the token is associated with the first policy and the token is valid.

## Description

### RELATED APPLICATIONS

This application claims the benefit of and priority to U.S. Nonprovisional Patent Application No. 17/528,074, entitled "Methods and Apparatus for Validation of Rules of a Smart Contract on a Centralized or Distributed Digital Ledger," filed November 16, 2021; U.S. Nonprovisional Patent Application No. 17/410,549, entitled "Methods and Apparatus for Validation of Rules of a Smart Contract on a Centralized or Distributed Digital Ledger," filed August 24, 2021; and U.S. Provisional Patent Application No. 63/194,769, entitled "Methods and Apparatus for Validation of Rules of a Smart Contract on a Centralized or Distributed Digital Ledger," filed May 28, 2021, the entirety of each of which is incorporated by reference herein.

### TECHNICAL FIELD

The present disclosure relates to systems and methods for validating policies of a smart contract. In particular, the present disclosure relates to validation of policies of a smart contract on a centralized or distributed digital ledger.

### BACKGROUND

Transactions may be carried out on a centralized or distributed digital ledger. These transactions may employ a protocol smart contract containing an order (for something) and a means of paying for the order. The protocol smart contract may match to a counter-party and the order contained within is fulfilled. Such transactions do not account for any knowledge of the counter-party to the order requested. If the protocol smart contract and the centralized or distributed digital ledger is used for such transactions, then there is no method to ensure compliance with transaction policies. Some transactional protocols may have strict transaction policies, and organizations and/or individuals should comply with the transaction policies to participate in transactions within these transactional protocols. Since there is no way to ensure compliance, the protocol smart contract may not be suitable for participating in transactions requiring compliance with the transaction policies.

A solution is required which allows a party (organizations and/or individuals), engaging in a transaction within a transactional protocol defining transaction policies, to know with certainty that all parties to that transaction are allowed to participate. The solution requires all parties to abide by the transaction policies and all parties to be vetted by a trusted organization using a robust methodology.

### SUMMARY

The present disclosure generally relates to systems and methods for validating policies of a smart contract. In particular, the present disclosure relates to validation of policies of a smart contract on a centralized or distributed digital ledger.

Systems and methods are provided for policy-validated transactions using a centralized or distributed ledger. In an example embodiment, a method for policy-validated transactions using a centralized or distributed ledger is described, which includes receiving, by a first computing device in communication with a centralized or distributed ledger from a computing device associated with a user, a request to execute a transaction and a transaction signature generated with a private key of the computing device associated with the user, the transaction corresponding to a token associated with the computing device of the user, and the transaction subject to a first policy of a set of one or more policies; determining, by the first computing device using a public key of the computing device associated with the user, that the transaction signature corresponds to the request to execute the transaction; responsive to the determination, retrieving, by the first computing device from the centralized or distributed ledger, the token associated with the computing device of the user; determining, by the first computing device, that the token is associated with the first policy and that the token is valid; and responsive to the determination, executing the transaction, by the first computing device.

In some embodiments, the token identifies the first policy.

In some embodiments, the token comprises a status identifier.

In some embodiments, the token comprises an identifier of a validity period.

In some embodiments, the token is generated by one of the first computing device and a second computing device and stored in the centralized or distributed ledger.

In some embodiments, the token is generated by the one of the first computing device and the second computing device and stored in the centralized or distributed ledger responsive to validated credentials of the user complying with the first policy.

In some embodiments, the token is generated by the one of the first computing device and the second computing device and stored in the centralized or distributed ledger responsive to validation of a cryptographic nonce using the public and private key of the computing device associated with the user.

In some embodiments, the set of one or more polices comprise a plurality of policies in a parent-child hierarchy; wherein the first policy is a child of a second policy; and wherein the token is further associated with the second policy.

In some implementations, the method further includes identifying the transaction as subject to the first policy of the set of one or more policies responsive to one or more of the transaction, the token, and characteristics of the first computing device.

In some implementations, executing the transaction further comprises directing a second computing device, by the first computing device, to provide access to a good or service to the user.

In another example implementation, a system for rules-validated transactions using a centralized or distributed ledger is described, which includes a first computing device comprising a network interface in communication with a computing device associated with a user and a memory device storing a centralized or distributed ledger, and a processor. The processor is configured to receive, via the network interface from the computing device associated with the user, a request to execute a transaction and a transaction signature generated with a private key of the computing device associated with the user, the transaction corresponding to a token associated with the computing device of the user, and the transaction subject to a first policy of a set of one or more policies, determine, using a public key of the computing device associated with the user, that the transaction signature corresponds to the request to execute the transaction, responsive to the determination, retrieve, from the centralized or distributed ledger, the token associated with the computing device of the user, determine that the token is associated with the first policy and that the token is valid, and responsive to the determination, execute the transaction.

Other aspects and advantages of the disclosure will become apparent from the following detailed description, taken in conjunction with the accompanying drawings, which illustrate by way of example the principles of the disclosure.

### BRIEF DESCRIPTION OF THE DRAWINGS

The foregoing and other objects, aspects, features, and advantages of the disclosure will become more apparent and better understood by referring to the following description taken in conjunction with the accompanying drawings, in which:
FIG. 1A is a block diagram depicting an embodiment of a network environment comprising client devices in communication with server devices, according to some embodiments;
FIG. 1B is a block diagram depicting a cloud computing environment comprising client devices in communication with cloud service providers, according to some embodiments;
FIG. 1C and 1D are block diagrams depicting embodiments of computing devices useful in connection with the methods and systems described herein, according to some embodiments;
FIG. 2 depicts an implementation of some of an architecture of a system for validation of policies of a smart contract on a centralized or distributed digital ledger, according to some embodiments;
FIG. 3 depicts a sequence diagram for a user to acquire a token from a trusted organization, according to some embodiments;
FIG. 4 depicts a flowchart for issuing a token, according to some embodiments, according to some embodiments;
FIG. 5 depicts a sequence diagram for the user to engage in an ecosystem transaction, according to some embodiments;
FIG. 6 depicts a tier structure of a hierarchical token, according to some embodiments;
FIGS. 7A and 7B depict a network of trusted organizations, according to some embodiments; and
FIG. 8 depicts a flowchart for policy-validating transactions using a centralized or distributed ledger, according to some embodiments.

### DETAILED DESCRIPTION

In various embodiments of the disclosure, non-limiting definitions of one or more terms that will be used in the document are provided below.

A term "credentials" may refer to a set of data points associated with a user which may be provided by the user or may be obtained independently, checked, and formally validated by a trusted organization to be true. The credentials may indicate that the user abides by transaction policies set by a transactional protocol and thus may be allowed to make ecosystem transactions on that transactional protocol. Examples of a credential may include nationality, social security number, place of residence, place of birth, age, credit rating, account balance. The credentials may also include physical documents representing the set of data points, such as a passport, a social security card, a green card, a driver's license, a college degree, a diploma, a training certification, a marriage license, a court document, a title, a deed, a chain of title, and the like.

A term "cryptographic nonce" may refer to an arbitrary number that is used only once in a cryptographic communication. The cryptographic nonce may be a random or pseudorandom number and may include a timestamp to ensure that the cryptographic nonce is used only once. The cryptographic nonce may be used to introduce more entropy into a hash.

A term "decentralized finance" or "DeFi" may refer to a blockchain-based form of finance that does not rely on central financial intermediaries such as brokerages, exchanges, or banks to offer traditional financial instruments. Instead, the DeFi uses smart contracts on blockchains.

A term "digital wallet" may refer to a software or hardware, or a combination of software and hardware asset that stores a collection of keys that controls digital assets or funds. The digital wallet may allow a user to make electronic commerce or ecosystem transactions easily and securely.

A term "ecosystem transaction" may refer to a transaction on a centralized or distributed digital ledger which is associated with a specific ecosystem or group of entities that are working in association (explicitly or implicitly, and directly or indirectly), have adopted similar policies, etc. An example of a specific ecosystem is a decentralized finance (DeFi) ecosystem. Other examples of ecosystems include an industry, a marketplace, a collection of similar units (e.g. product vending machines whether by the same or different manufacturers), etc.

A term "know your business" may refer to guidelines and processes by which an individual or a first organization may verify and validate identity, suitability, and risks of a second organization when engaging in a business relationship with the second organization.

A term "know your customer" may refer to guidelines and processes by which a first individual or an organization may verify and validate identity, suitability, and risks of a second individual when engaging in a business relationship.

A term "public-private key pair" may refer to a related pair of cryptographic keys generated by Public Key Infrastructure (PKI). The public-private key pair allows encryption and decryption of information to be carried out without a requirement to share a user's private key, thereby making for much more secure cryptography. In an example, a public key is generated from its private key using techniques defined by Elliptic Curve Cryptography.

A term "regulatory body" may refer to an organization whose purpose is to regulate another organization to ensure compliance with a set of policies, rules and/or principles.

A term "smart contract" may refer to a computer program or a transaction protocol that automatically executes, controls, or documents events and actions according to terms of a contract or an agreement.

A term "gateway smart contract" may refer to a smart contract that is associated with processing of tokens.

A term "protocol smart contract" may refer to a smart contract that is associated with the processing of a transactional protocol.

A term "state of token" may refer to a state such as valid, expired, frozen, revoked of a token.

A term "token" may represent a state or status. In an example, a token is used to represent that a user has satisfied transaction policies required to interact with a transactional protocol. Examples of the format of a token may include an entry in a database, an entry on a list, an entry at an address or in an account on a centralized or distributed digital ledger. A token may also be known as a gateway token.

A term "transaction policies" may refer to a set of policies which govern a transactional protocol and govern the ecosystem transactions which are executed. The transaction policies may also be referred to as transaction rules.

A term "transactional protocol" may refer to a protocol that operates by receiving, validating, and processing ecosystem transactions. State of the transactional protocol may change as a result of the processing of ecosystem transactions.

A term "trusted organization" may refer to an organization which has the means to check credentials of a user or a second organization as well as authority within a transactional protocol to declare that the user or the second organization is able to interact with the transactional protocol.

A term "user" may refer to an individual or an organization that wants to carry out ecosystem transactions in a transactional protocol. A user may include a living person, a citizen, a legal entity, an autonomous device, a robot, a corporation, an organization, a company or partnership or other legal entity that can execute contracts, an agent or representative, an ambassador, a state, a city, a nation, a county, a party to a transaction, a group, a military, a government, a household, and the like.

A term "digital ledger" may refer to a digital record of who-owns-what. A digital ledger may be a centralized digital ledger or a distributed digital ledger. A centralized digital ledger or a centralized database is a system where data is stored in a master database with a single point of control, i.e., there exists a party that alone acts on behalf of clients to modify the system state. A distributed digital ledger is fundamentally different from a centralized digital ledger. In a distributed digital ledger, any party or node on a network has access to the digital ledger. Authorization, rather than being a function that is added onto the system at the end, is built into the lowest level of the stack. The distributed digital ledger is replicated among many different nodes in a peer-to-peer network, and a consensus algorithm ensures that each node's copy of the digital ledger is identical to every other node's copy. Asset owners must use cryptographic signatures to make transactions on a distributed digital ledger. Cryptocurrencies, such as Bitcoin and Ether, make use of a distributed digital ledger called a blockchain.

For the purposes of reading the description of the various embodiments below, the following descriptions of the sections of the specifications and their respective contents may be helpful:

Section A describes a network environment and computing environment which may be useful for practicing embodiments described herein.

Section B describes embodiments of systems and methods for validating policies of a smart contract. In particular, Section B describes validation of policies of a smart contract on a centralized or distributed digital ledger.

### A. Computing and Network Environment

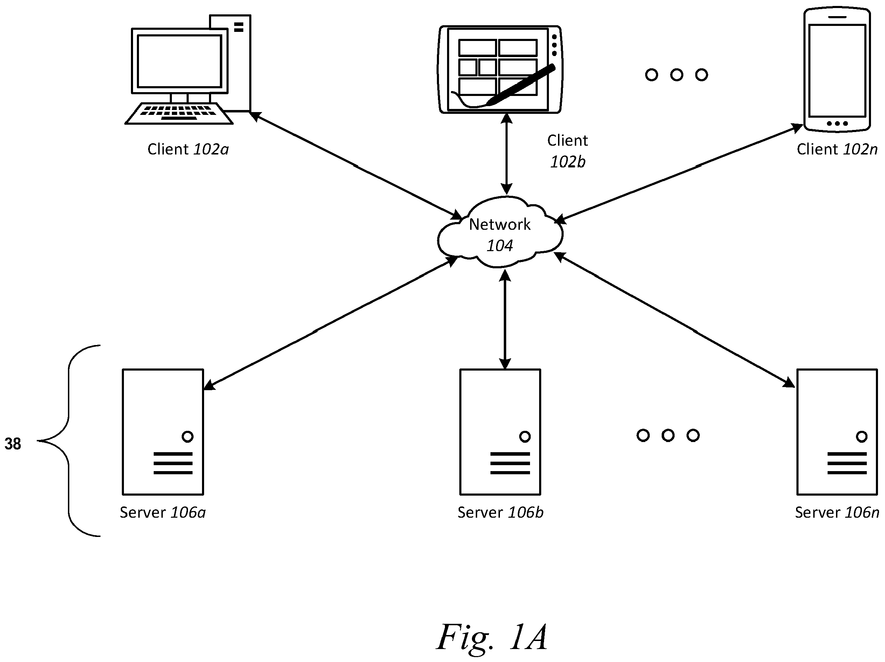

Prior to discussing specific embodiments of the present solution, it may be helpful to describe aspects of the operating environment as well as associated system components (e.g., hardware elements) in connection with the methods and systems described herein. Referring to FIG. 1A, an embodiment of a network environment is depicted. In a brief overview, the network environment includes one or more clients 102a - 102n (also generally referred to as local machines(s) 102, client(s) 102, client node(s) 102, client machine(s) 102, client computer(s) 102, client device(s) 102, endpoint(s) 102, or endpoint node(s) 102) in communication with one or more servers 106a - 106n (also generally referred to as server(s) 106, node(s) 106, machine(s) 106, or remote machine(s) 106) via one or more networks 104. In some embodiments, client 102 has the capacity to function as both a client node seeking access to resources provided by a server and as a server providing access to hosted resources for other clients 102a -102n.

Although FIG. 1A shows a network 104 between clients 102 and the servers 106, clients 102 and servers 106 may be on the same network 104. In some embodiments, there are multiple networks 104 between clients 102 and servers 106. In one of these embodiments, network 104' (not shown) may be a private network and a network 104 may be a public network. In another of these embodiments, network 104 may be a private network and a network 104' may be a public network. In still another of these embodiments, networks 104 and 104' may both be private networks.

Network 104 may be connected via wired or wireless links. Wired links may include Digital Subscriber Line (DSL), coaxial cable lines, or optical fiber lines. Wireless links may include Bluetooth^{®}, Bluetooth Low Energy (BLE), ANT/ANT+, ZigBee, Z-Wave, Thread, Wi-Fi^{®}, Worldwide Interoperability for Microwave Access (WiMAX^{®}), mobile WiMAX^{®}, WiMAX^{®}-Advanced, NFC, SigFox, LoRa, Random Phase Multiple Access (RPMA), Weightless-N/P/W, an infrared channel, or a satellite band. The wireless links may also include any cellular network standards to communicate among mobile devices, including standards that qualify as 1G, 2G, 3G, 4G, or 5G. The network standards may qualify as one or more generations of mobile telecommunication standards by fulfilling a specification or standards such as the specifications maintained by the International Telecommunication Union. The 3G standards, for example, may correspond to the International Mobile Telecommuniations-2000 (IMT-2000) specification, and the 4G standards may correspond to the International Mobile Telecommunication Advanced (IMT-Advanced) specification. Examples of cellular network standards include AMPS, GSM, GPRS, UMTS, CDMA2000, CDMA-1xRTT, CDMA-EVDO, LTE, LTE-Advanced, LTE-M1, and Narrowband IoT (NB-IoT). Wireless standards may use various channel access methods, e.g., FDMA, TDMA, CDMA, or SDMA. In some embodiments, different types of data may be transmitted via different links and standards. In other embodiments, the same types of data may be transmitted via different links and standards.

Network 104 may be any type and/or form of network. The geographical scope of the network may vary widely and network 104 can be a body area network (BAN), a personal area network (PAN), a local-area network (LAN), e.g., Intranet, a metropolitan area network (MAN), a wide area network (WAN), or the Internet. The topology of network 104 may be of any form and may include, e.g., any of the following: point-to-point, bus, star, ring, mesh, or tree. Network 104 may be an overlay network which is virtual and sits on top of one or more layers of other networks 104'. Network 104 may be of any such network topology as known to those ordinarily skilled in the art capable of supporting the operations described herein. Network 104 may utilize different techniques and layers or stacks of protocols, including, e.g., the Ethernet protocol, the internet protocol suite (TCP/IP), the ATM (Asynchronous Transfer Mode) technique, the SONET (Synchronous Optical Networking) protocol, or the SDH (Synchronous Digital Hierarchy) protocol. The TCP/IP internet protocol suite may include application layer, transport layer, internet layer (including, e.g., IPv4 and IPv6), or the link layer. Network 104 may be a type of broadcast network, a telecommunications network, a data communication network, or a computer network.

In some embodiments, the system may include multiple, logically grouped servers 106. In one of these embodiments, the logical group of servers may be referred to as a server farm or a machine farm. In another of these embodiments, servers 106 may be geographically dispersed. In other embodiments, a machine farm may be administered as a single entity. In still other embodiments, the machine farm includes a plurality of machine farms. Servers 106 within each machine farm can be heterogeneous - one or more of servers 106 or machines 106 can operate according to one type of operating system platform (e.g., Windows, manufactured by Microsoft Corp. of Redmond, Washington), while one or more of the other servers 106 can operate according to another type of operating system platform (e.g., Unix, Linux, or Mac OSX).

In one embodiment, servers 106 in the machine farm may be stored in high-density rack systems, along with associated storage systems, and located in an enterprise data center. In the embodiment, consolidating servers 106 in this way may improve system manageability, data security, the physical security of the system, and system performance by locating servers 106 and high-performance storage systems on localized high-performance networks. Centralizing servers 106 and storage systems and coupling them with advanced system management tools allows more efficient use of server resources.

Servers 106 of each machine farm do not need to be physically proximate to another server 106 in the same machine farm. Thus, the group of servers 106 logically grouped as a machine farm may be interconnected using a wide-area network (WAN) connection or a metropolitan-area network (MAN) connection. For example, a machine farm may include servers 106 physically located in different continents or different regions of a continent, country, state, city, campus, or room. Data transmission speeds between servers 106 in the machine farm can be increased if servers 106 are connected using a local-area network (LAN) connection or some form of direct connection. Additionally, a heterogeneous machine farm may include one or more servers 106 operating according to a type of operating system, while one or more other servers execute one or more types of hypervisors rather than operating systems. In these embodiments, hypervisors may be used to emulate virtual hardware, partition physical hardware, virtualize physical hardware, and execute virtual machines that provide access to computing environments, allowing multiple operating systems to run concurrently on a host computer. Native hypervisors may run directly on the host computer. Hypervisors may include VMware ESX/ESXi, manufactured by VMWare, Inc., of Palo Alta, California; the Xen hypervisor, an open source product whose development is overseen by Citrix Systems, Inc. of Fort Lauderdale, Florida; the HYPER-V hypervisors provided by Microsoft, or others. Hosted hypervisors may run within an operating system on a second software level. Examples of hosted hypervisors may include VMWare Workstation and VirtualBox, manufactured by Oracle Corporation of Redwood City, California. Additional layers of abstraction may include Container Virtualization and Management infrastructure. Container Virtualization isolates execution of a service to the container while relaying instructions to the machine through one operating system layer per host machine. Container infrastructure may include Docker, an open source product whose development is overseen by Docker, Inc. of San Francisco, California.

Management of the machine farm may be de-centralized. For example, one or more servers 106 may comprise components, subsystems, and modules to support one or more management services for the machine farm. In one of these embodiments, one or more servers 106 provide functionality for management of dynamic data, including techniques for handling failover, data replication, and increasing the robustness of the machine farm. Each server 106 may communicate with a persistent store and, in some embodiments, with a dynamic store.

Server 106 may be a file server, application server, web server, proxy server, appliance, network appliance, gateway, gateway server, virtualization server, deployment server, SSL VPN server, or firewall. In one embodiment, a plurality of servers 106 may be in the path between any two communicating servers 106.

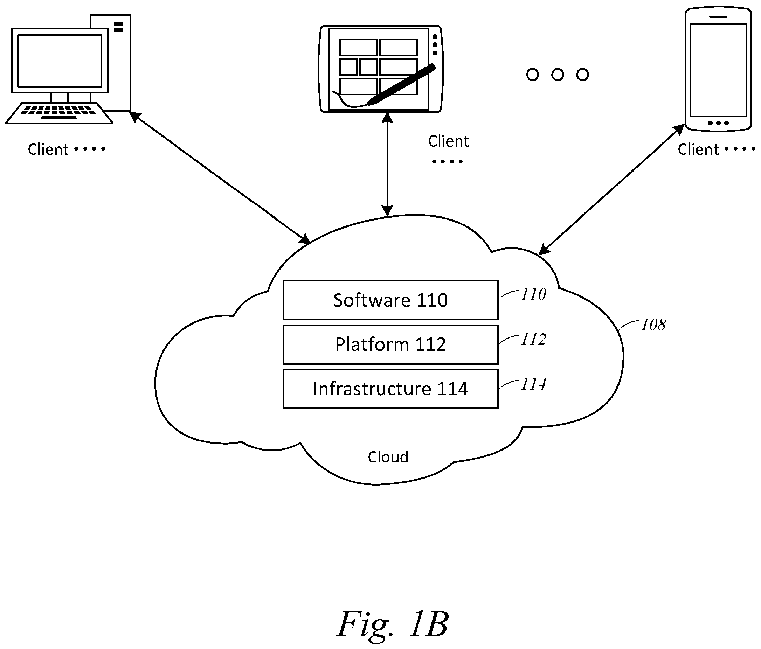

Referring to FIG. 1B, a cloud computing environment is depicted. A cloud computing environment may provide client 102 with one or more resources provided by a network environment. The cloud computing environment may include one or more clients 102a - 102n, in communication with cloud 108 over one or more networks 104. Clients 102 may include, e.g., thick clients, thin clients, and zero clients. A thick client may provide at least some functionality even when disconnected from cloud 108 or servers 106. A thin client or zero client may depend on the connection to cloud 108 or server 106 to provide functionality. A zero client may depend on cloud 108 or other networks 104 or servers 106 to retrieve operating system data for the client device 102. Cloud 108 may include back end platforms, e.g., servers 106, storage, server farms or data centers.

Cloud 108 may be public, private, or hybrid. Public clouds may include public servers 106 that are maintained by third parties to clients 102 or the owners of the clients. Servers 106 may be located off-site in remote geographical locations as disclosed above or otherwise. Public clouds may be connected to servers 106 over a public network. Private clouds may include private servers 106 that are physically maintained by clients 102 or owners of clients. Private clouds may be connected to servers 106 over a private network 104. Hybrid clouds 109 may include both the private and public networks 104 and servers 106.

Cloud 108 may also include a cloud-based delivery, e.g., Software as a Service (SaaS) 110, Platform as a Service (PaaS) 112, and Infrastructure as a Service (IaaS) 114. IaaS may refer to a user renting the user of infrastructure resources that are needed during a specified time period. IaaS provides may offer storage, networking, servers, or virtualization resources from large pools, allowing the users to quickly scale up by accessing more resources as needed. Examples of IaaS include Amazon Web Services (AWS) provided by Amazon, Inc. of Seattle, Washington, Rackspace Cloud provided by Rackspace Inc. of San Antonio, Texas, Google Compute Engine provided by Google Inc. of Mountain View, California, or RightScale provided by RightScale, Inc. of Santa Barbara, California. PaaS providers may offer functionality provided by IaaS, including, e.g., storage, networking, servers, virtualization, or containerization, as well as additional resources, e.g., the operating system, middleware, or runtime resources. Examples of PaaS include Windows Azure provided by Microsoft Corporation of Redmond, Washington, Google App Engine provided by Google Inc., and Heroku provided by Heroku, Inc. of San Francisco California. SaaS providers may offer the resources that PaaS provides, including storage, networking, servers, virtualization, operating system, middleware, or runtime resources. In some embodiments, SaaS providers may offer additional resources including, e.g., data and application resources. Examples of SaaS include Google Apps provided by Google Inc., Salesforce provided by Salesforce.com Inc. of San Francisco, California, or Office365 provided by Microsoft Corporation. Examples of SaaS may also include storage providers, e.g., Dropbox provided by Dropbox Inc. of San Francisco, California, Microsoft OneDrive provided by Microsoft Corporation, Google Drive provided by Google Inc., or Apple iCloud provided by Apple Inc. of Cupertino, California.

Clients 102 may access IaaS resources with one or more IaaS standards, including, e.g., Amazon Elastic Compute Cloud (EC2), Open Cloud Computing Interface (OCCI), Cloud Infrastructure Management Interface (CIMI), or OpenStack standards. Some IaaS standards may allow clients access to resources over a Hypertext Transfer Protocol (HTTP) and may use Representational State Transfer (REST) protocol or Simple Object Access Protocol (SOAP). Clients 102 may access PaaS resources with different PaaS interfaces. Some PaaS interfaces use HTTP packages, standard Java APIs, JavaMail API, Java Data Objects (JDO), Java Persistence API (JPA), Python APIs, web integration APIs for different programming languages including, e.g., Rack for Ruby, WSGI for Python, or PSGI for Perl, or other APIs that may be built on REST, HTTP, XML, or other protocols. Clients 102 may access SaaS resources using web-based user interfaces, provided by a web browser (e.g., Google Chrome, Microsoft Internet Explorer, or Mozilla Firefox provided by Mozilla Foundation of Mountain View, California). Clients 102 may also access SaaS resources through smartphone or tablet applications, including e.g., Salesforce Sales Cloud, or Google Drive App. Clients 102 may also access SaaS resources through the client operating system, including e.g., Windows file system for Dropbox.

In some embodiments, access to IaaS, PaaS, or SaaS resources may be authenticated. For example, a server or authentication server may authenticate a user via security certificates, HTTPS, or API keys. API keys may include various encryption standards such as, e.g., Advanced Encryption Standard (AES). Data resources may be sent over Transport Layer Security (TLS) or Secure Sockets Layer (SSL).

Client 102 and server 106 may be deployed as and/or executed on any type and form of computing device, e.g., a computer, network device or appliance capable of communicating on any type and form of network and performing the operations described herein.

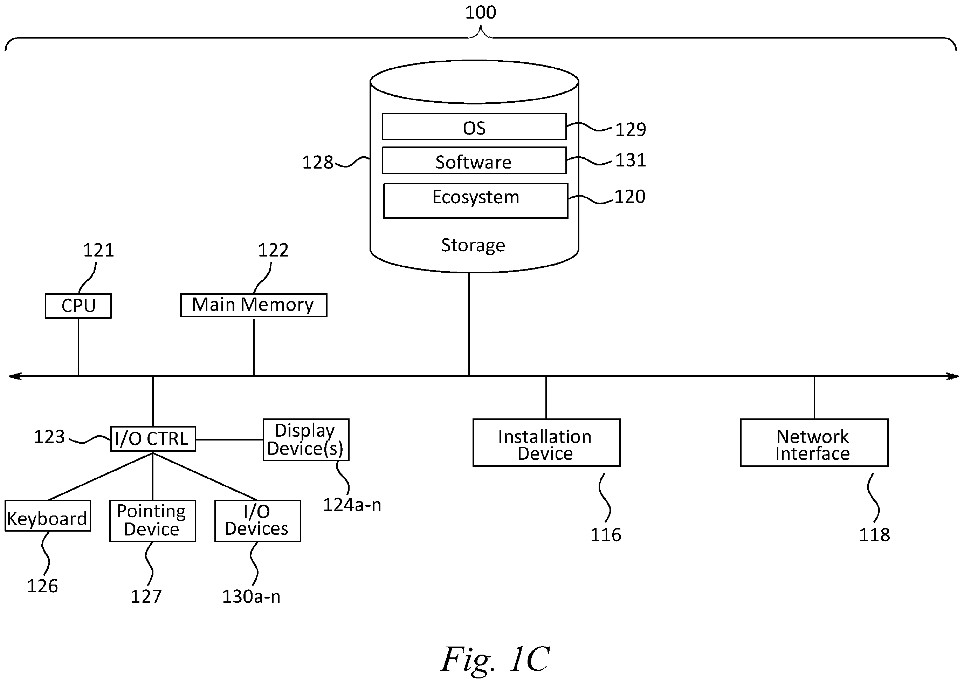

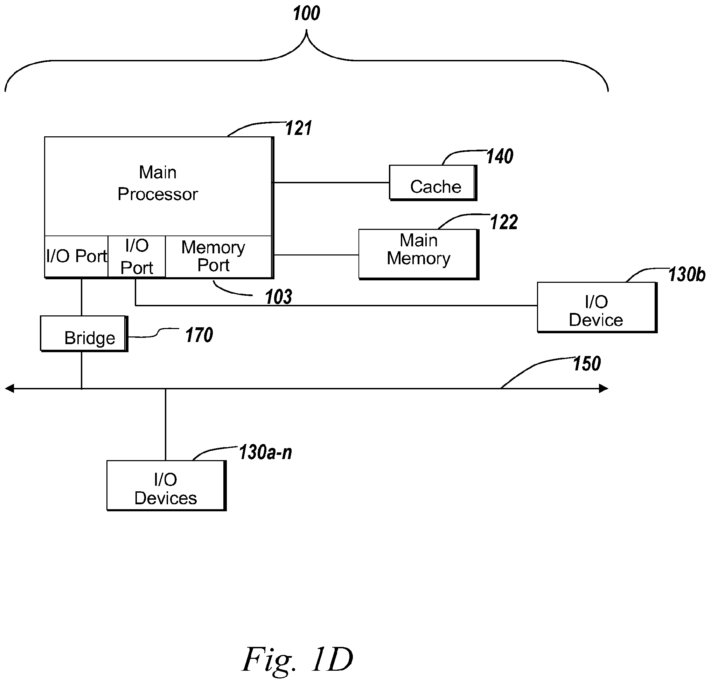

FIGS. 1C and 1D depict block diagrams of a computing device 100 useful for practicing an embodiment of client 102 or server 106. As shown in FIGS. 1C and 1D, each computing device 100 includes central processing unit 121, and main memory unit 122. As shown in FIG. 1C, computing device 100 may include storage device 128, installation device 116, network interface 118, and I/O controller 123, display devices 124a - 124n, keyboard 126 and pointing device 127, e.g., a mouse. Storage device 128 may include, without limitation, operating system 129, software 131, and a software of ecosystem 120. As shown in FIG. 1D, each computing device 100 may also include additional optional elements, e.g., a memory port 103, bridge 170, one or more input/output devices 130a - 130n (generally referred to using reference numeral 130), and cache memory 140 in communication with central processing unit 121.

Central processing unit 121 is any logic circuity that responds to and processes instructions fetched from main memory unit 122. In many embodiments, central processing unit 121 is provided by a microprocessor unit, e.g.: those manufactured by Intel Corporation of Mountain View, California; those manufactured by Motorola Corporation of Schaumburg, Illinois; the ARM processor and TEGRA system on a chip (SoC) manufactured by Nvidia of Santa Clara, California; the POWER7 processor, those manufactured by International Business Machines of White Plains, New York; or those manufactured by Advanced Micro Devices of Sunnyvale, California. Computing device 100 may be based on any of these processors, or any other processor capable of operating as described herein. Central processing unit 121 may utilize instruction level parallelism, thread level parallelism, different levels of cache, and multi-core processors. A multi-core processor may include two or more processing units on a single computing component. Examples of multi-core processors include the AMD PHENOM IIX2, INTEL CORE i5 and INTEL CORE i7.

Main memory unit 122 may include one or more memory chips capable of storing data and allowing any storage location to be directly accessed by microprocessor 121. Main memory unit 122 may be volatile and faster than storage 128 memory. Main memory units 122 may be Dynamic Random-Access Memory (DRAM) or any variants, including static Random-Access Memory (SRAM), Burst SRAM or SynchBurst SRAM (BSRAM), Fast Page Mode DRAM (FPM DRAM), Enhanced DRAM (EDRAM), Extended Data Output RAM (EDO RAM), Extended Data Output DRAM (EDO DRAM), Burst Extended Data Output DRAM (BEDO DRAM), Single Data Rate Synchronous DRAM (SDR SDRAM), Double Data Rate SDRAM (DDR SDRAM), Direct Rambus DRAM (DRDRAM), or Extreme Data Rate DRAM (XDR DRAM). In some embodiments, main memory 122 or storage 128 may be non-volatile; e.g., non-volatile read access memory (NVRAM), flash memory non-volatile static RAM (nvSRAM), Ferroelectric RAM (FeRAM), Magnetoresistive RAM (MRAM), Phase-change memory (PRAM), conductive-bridging RAM (CBRAM), Silicon-Oxide-Nitride-Oxide-Silicon (SONOS), Resistive RAM (RRAM), Racetrack, Nano-RAM (NRAM), or Millipede memory. Main memory 122 may be based on any of the above described memory chips, or any other available memory chips capable of operating as described herein. In the embodiment shown in FIG. 1C, the processor 121 communicates with main memory 122 via system bus 150 (described in more detail below). FIG. 1D depicts an embodiment of computing device 100 in which the processor communicates directly with main memory 122 via memory port 103. For example, in FIG. 1D main memory 122 may be DRDRAM.

FIG. 1D depicts an embodiment in which the main processor 121 communicates directly with cache memory 140 via a secondary bus, sometimes referred to as a backside bus. In other embodiments, main processor 121 communicates with cache memory 140 using system bus 150. Cache memory 140 typically has a faster response time than main memory 122 and is typically provided by SRAM, BSRAM, or EDRAM. In the embodiment shown in FIG. 1D, the processor 121 communicates with various I/O devices 130 via local system bus 150. Various buses may be used to connect central processing unit 121 to any of I/O devices 130, including a PCI bus, a PCI-X bus, or a PCI-Express bus, or a NuBus. For embodiments in which the I/O device is video display 124, the processor 121 may use an Advanced Graphic Port (AGP) to communicate with display 124 or the I/O controller 123 for display 124. FIG. 1D depicts an embodiment of computer 100 in which main processor 121 communicates directly with I/O device 130b or other processors 121' via HYPERTRANSPORT, RAPIDIO, or INFINIBAND communications technology. FIG. 1D also depicts an embodiment in which local busses and direct communication are mixed: the processor 121 communicates with I/O device 130a using a local interconnect bus while communicating with I/O device 130b directly.

A wide variety of I/O devices 130a - 130n may be present in computing device 100. Input devices may include keyboards, mice, trackpads, trackballs, touchpads, touch mice, multi-touch touchpads and touch mice, microphones, multi-array microphones, drawing tablets, cameras, single-lens reflex cameras (SLR), digital SLR (DSLR), CMOS sensors, accelerometers, infrared optical sensors, pressure sensors, magnetometer sensors, angular rate sensors, depth sensors, proximity sensors, ambient light sensors, gyroscopic sensors, or other sensors. Output devices may include video displays, graphical displays, speakers, headphones, inkjet printers, laser printers, and 3D printers.

Devices 130a -130n may include a combination of multiple input or output devices, including, e.g., Microsoft KINECT, Nintendo Wiimote for the WII, Nintendo WII U GAMEPAD, or Apple iPhone. Some devices 130a - 130n allow gesture recognition inputs through combining some of the inputs and outputs. Some devices 130a - 130n provide for facial recognition which may be utilized as an input for different purposes including authentication and other commands. Some devices 130a - 130n provide for voice recognition and inputs, including, e.g., Microsoft KINECT, SIRI for iPhone by Apple, Google Now or Google Voice Search, and Alexa by Amazon.

Additional devices 130a - 130n have both input and output capabilities, including, e.g., haptic feedback devices, touchscreen displays, or multi-touch displays. Touchscreen, multi-touch displays, touchpads, touch mice, or other touch sensing devices may use different technologies to sense touch, including, e.g., capacitive, surface capacitive, projected capacitive touch (PCT), in cell capacitive, resistive, infrared, waveguide, dispersive signal touch (DST), in-cell optical, surface acoustic wave (SAW), bending wave touch (BWT), or force-based sensing technologies. Some multi-touch devices may allow two or more contact points with the surface, allowing advanced functionality including, e.g., pinch, spread, rotate, scroll, or other gestures. Some touchscreen devices, including, e.g., Microsoft PIXELSENSE or Multi-Touch Collaboration Wall, may have larger surfaces, such as on a table-top or on a wall, and may also interact with other electronic devices. Some I/O devices 130a - 130n, display devices 124a - 124n or group of devices may be augmented reality devices. The I/O devices may be controlled by I/O controller 123 as shown in FIG. 1C. The I/O controller may control one or more I/O devices, such as, e.g., keyboard 126 and pointing device 127, e.g., a mouse or optical pen. Furthermore, an I/O device may also provide storage and/or installation medium 116 for computing device 100. In still other embodiments, computing device 100 may provide USB connections (not shown) to receive handheld USB storage devices. In further embodiments, a I/O device 130 may be a bridge between the system bus 150 and an external communication bus, e.g., a USB bus, a SCSI bus, a FireWire bus, an Ethernet bus, a Gigabit Ethernet bus, a Fiber Channel bus, or a Thunderbolt bus.

In some embodiments, display devices 124a - 124n may be connected to I/O controller 123. Display devices may include, e.g., liquid crystal displays (LCD), thin film transistor LCD (TFT-LCD), blue phase LCD, electronic papers (e-ink) displays, flexile displays, light emitting diode displays (LED), digital light processing (DLP) displays, liquid crystal on silicon (LCOS) displays, organic light-emitting diode (OLED) displays, active-matrix organic light-emitting diode (AMOLED) displays, liquid crystal laser displays, time-multiplexed optical shutter (TMOS) displays, or 3D displays. Examples of 3D displays may use, e.g., stereoscopy, polarization filters, active shutters, or auto stereoscopy. Display devices 124a - 124n may also be a head-mounted display (HMD). In some embodiments, display devices 124a - 124n or the corresponding I/O controllers 123 may be controlled through or have hardware support for OPENGL or DIRECTX API or other graphics libraries.

In some embodiments, computing device 100 may include or connect to multiple display devices 124a - 124n, which each may be of the same or different type and/or form. As such, any of I/O devices 130a-130n and/or the I/O controller 123 may include any type and/or form of suitable hardware, software, or combination of hardware and software to support, enable or provide for the connection and use of multiple display devices 124a - 124n by computing device 100. For example, computing device 100 may include any type and/or form of video adapter, video card, driver, and/or library to interface, communicate, connect, or otherwise use display devices 124a - 124n. In one embodiment, a video adapter may include multiple connectors to interface to multiple display devices 124a - 124n. In other embodiments, computing device 100 may include multiple video adapters, with each video adapter connected to one or more of display devices 124a - 124n. In some embodiments, any portion of the operating system of computing device 100 may be configured for using multiple displays 124a - 124n. In other embodiments, one or more of the display devices 124a - 124n may be provided by one or more other computing devices 100a or 100b connected to computing device 100, via network 104. In some embodiments, software may be designed and constructed to use another computer's display device as second display device 124a for computing device 100. For example, in one embodiment, an Apple iPad may connect to computing device 100 and use the display of the device 100 as an additional display screen that may be used as an extended desktop. One ordinarily skilled in the art will recognize and appreciate the various ways and embodiments that computing device 100 may be configured to have multiple display devices 124a - 124n.

Referring again to FIG. 1C, computing device 100 may comprise storage device 128 (e.g., one or more hard disk drives or redundant arrays of independent disks) for storing an operating system or other related software, and for storing application software programs such as any program related to ecosystem 120. Examples of storage device 128 include, e.g., hard disk drive (HDD); optical drive including CD drive, DVD drive, or BLU-RAY drive; solid-state drive (SSD); USB flash drive; or any other device suitable for storing data. Some storage devices may include multiple volatile and non-volatile memories, including, e.g., solid state hybrid drives that combine hard disks with solid state cache. Some storage device 128 may be non-volatile, mutable, or read-only. Some storage device 128 may be internal and connect to computing device 100 via bus 150. Some storage device 128 may be external and connect to computing device 100 via a 1/0 device 130 that provides an external bus. Some storage device 128 may connect to computing device 100 via network interface 118 over network 104, including, e.g., the Remote Disk for MACBOOK AIR by Apple. Some client devices 100 may not require a non-volatile storage device 128 and may be thin clients or zero clients 102. Some storage device 128 may also be used as an installation device 116 and may be suitable for installing software and programs. Additionally, the operating system and the software can be run from a bootable medium, for example, a bootable CD, e.g., KNOPPIX, a bootable CD for GNU/Linux that is available as a GNU/Linux distribution from knoppix.net.

Computing device 100 (e.g., client device 102) may also install software or application from an application distribution platform. Examples of application distribution platforms include the App Store for iOS provided by Apple, Inc., the Mac App Store provided by Apple, Inc., GOOGLE PLAY for Android OS provided by Google Inc., Chrome Webstore for CHROME OS provided by Google Inc., and Amazon Appstore for Android OS and KINDLE FIRE provided by Amazon.com, Inc. An application distribution platform may facilitate installation of software on client device 102. An application distribution platform may include a repository of applications on server 106 or cloud 108, which clients 102a-102n may access over a network 104. An application distribution platform may include application developed and provided by various developers. A user of client device 102 may select, purchase and/or download an application via the application distribution platform.

Furthermore, computing device 100 may include a network interface 118 to interface to network 104 through a variety of connections including, but not limited to, standard telephone lines LAN or WAN links (e.g., 802.11, Tl, T3, Gigabit Ethernet, InfiniBand), broadband connections (e.g., ISDN, Frame Relay, ATM, Gigabit Ethernet, Ethernet-over- SONET, ADSL, VDSL, BPON, GPON, fiber optical including FiOS), wireless connections, or some combination of any or all of the above. Connections can be established using a variety of communication protocols (e.g., TCP/IP, Ethernet, ARCNET, SONET, SDH, Fiber Distributed Data Interface (FDDI), IEEE 802.1 la/b/g/n/ac CDMA, GSM, WiMAX, and direct asynchronous connections). In one embodiment, computing device 100 communicates with other computing devices 100' via any type and/or form of gateway or tunneling protocol e.g. Secure Socket Layer (SSL) or Transport Layer Security (TLS), or the Citrix Gateway Protocol manufactured by Citrix Systems, Inc. Network interface 118 may comprise a built-in network adapter, network interface card, PCMCIA network card, EXPRESSCARD network card, card bus network adapter, wireless network adapter, USB network adapter, modem or any other device suitable for interfacing computing device 100 to any type of network capable of communication and performing the operations described herein.

Computing device 100 of the sort depicted in FIGS. 1B and 1C may operate under the control of an operating system, which controls scheduling of tasks and access to system resources. Computing device 100 can be running any operating system such as any of the versions of the MICROSOFT WINDOWS operating systems, the different releases of the Unix and Linux operating systems, any version of the MAC OS for Macintosh computers, any embedded operating system, any real-time operating system, any open source operating system, any proprietary operating system, any operating systems for mobile computing devices, or any other operating system capable of running on the computing device and performing the operations described herein. Typical operating systems include, but are not limited to: WINDOWS 2000, WINDOWS Server 2012, WINDOWS CE, WINDOWS Phone, WINDOWS XP, WINDOWS VISTA, and WINDOWS 7, WINDOWS RT, WINDOWS 8 and WINDOWS 10, all of which are manufactured by Microsoft Corporation of Redmond, Washington; MAC OS and iOS, manufactured by Apple, Inc.; and Linux, a freely-available operating system, e.g. Linux Mint distribution ("distro") or Ubuntu, distributed by Canonical Ltd. of London, United Kingdom; or Unix or other Unix-like derivative operating systems; and Android, designed by Google Inc., among others. Some operating systems, including, e.g., the CHROME OS by Google Inc., may be used on zero clients or thin clients, including, e.g., CHROMEBOOKS.

Computer system 100 can be any workstation, telephone, desktop computer, laptop or notebook computer, netbook, ULTRABOOK, tablet, server, handheld computer, mobile telephone, smartphone or other portable telecommunications device, media playing device, a gaming system, mobile computing device, or any other type and/or form of computing, telecommunications or media device that is capable of communication. Computer system 100 has sufficient processor power and memory capacity to perform the operations described herein. In some embodiments, computing device 100 may have different processors, operating systems, and input devices consistent with the device. The Samsung GALAXY smartphones, e.g., operate under the control of Android operating system developed by Google, Inc. GALAXY smartphones receive input via a touch interface.

In some embodiments, computing device 100 is a gaming system. For example, the computer system 100 may comprise a PLAYSTATION 3, or PERSONAL PLAYSTATION PORTABLE (PSP), PLAYSTATION VITA, PLAYSTATION 4, or a PLAYSTATION 4 PRO device manufactured by the Sony Corporation of Tokyo, Japan, or a NINTENDO DS, NINTENDO 3DS, NINTENDO WII, NINTENDO WII U, or a NINTENDO SWITCH device manufactured by Nintendo Co., Ltd., of Kyoto, Japan, or an XBOX 360 device manufactured by Microsoft Corporation.

In some embodiments, computing device 100 is a digital audio player such as the Apple IPOD, IPOD Touch, and IPOD NANO lines of devices, manufactured by Apple Computer of Cupertino, California. Some digital audio players may have other functionality, including, e.g., a gaming system or any functionality made available by an application from a digital application distribution platform. For example, the IPOD Touch may access the Apple App Store. In some embodiments, computing device 100 is a portable media player or digital audio player supporting file formats including, but not limited to, MP3, WAV, M4A/AAC, WMA Protected AAC, AIFF, Audible audiobook, Apple Lossless audio file formats and .mov, .m4v, and .mp4 MPEG-4 (H.264/MPEG-4 AVC) video file formats.

In some embodiments, computing device 100 is a tablet e.g., the IPAD line of devices by Apple; GALAXY TAB family of devices by Samsung; or KINDLE FIRE, byAmazon.com, Inc. of Seattle, Washington. In other embodiments, computing device 100 is an eBook reader, e.g., the KINDLE family of devices by Amazon.com, or NOOK family of devices by Barnes & Noble, Inc. of New York City, New York.

In some embodiments, communications device 102 includes a combination of devices, e.g., a smartphone combined with a digital audio player or portable media player. For example, one of these embodiments is a smartphone, e.g., the iPhone family of smartphones manufactured by Apple, Inc.; a Samsung GALAXY family of smartphones manufactured by Samsung, Inc; or a Motorola DROID family of smartphones. In yet another embodiment, communications device 102 is a laptop or desktop computer equipped with a web browser and a microphone and speaker system, e.g., a telephony headset. In these embodiments, communications devices 102 are web-enabled and can receive and initiate phone calls. In some embodiments, a laptop or desktop computer is also equipped with a webcam or other video capture device that enables video chat and video call.

In some embodiments, the status of one or more machines 102, 106 in network 104 is monitored, generally as part of network management. In one of these embodiments, the status of a machine may include an identification of load information (e.g., the number of processes on the machine, CPU, and memory utilization), of port information (e.g., the number of available communication ports and the port addresses), or of session status (e.g., the duration and type of processes, and whether a process is active or idle). In another of these embodiments, the information may be identified by a plurality of metrics, and the plurality of metrics can be applied at least in part towards decisions in load distribution, network traffic management, and network failure recovery as well as any aspects of operations of the present solution described herein. Aspects of the operating environments and components described above will become apparent in the context of the systems and methods disclosed herein.

### B. Systems and methods to validate policies of a smart contract

The following describes systems and methods for validation of policies of a smart contract on a centralized or distributed digital ledger.

The systems and methods of the present disclosure enable a user to carry out ecosystem transactions via a protocol smart contract on a centralized or distributed digital ledger. A user may send a request to a trusted organization to verify credentials of the user and to validate that the user may engage in an ecosystem transaction within a transactional protocol. The trusted organization may receive the credentials and a cryptographically secure identity associated with the user. Based on the credentials provided by the user, the trusted organization may carry out a vetting process on the user in accordance with transaction policies defined by the transactional protocol. When the credentials of the user are verified to a predefined level of satisfaction, the user may be considered as abiding by the transaction policies and the trusted organization may issue a token to the user representing that the transaction policies are followed. When the user enters an ecosystem transaction, the user may provide the token along with other ecosystem transaction details. The token may be checked for validity and if it is controlled by the user. If the token is valid and controlled by the user, the ecosystem transaction may be included in the centralized or distributed digital ledger.

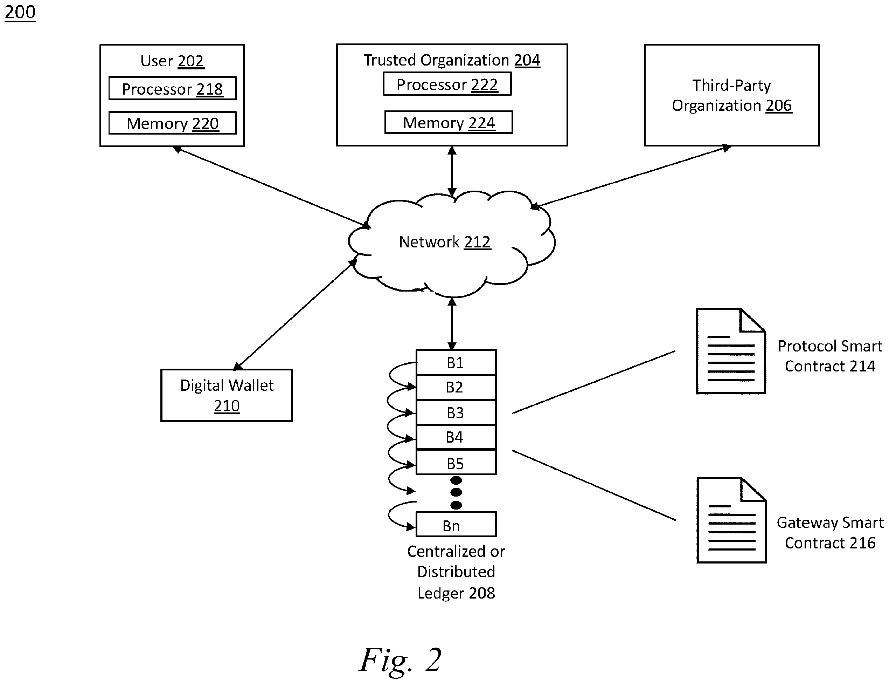

FIG. 2 depicts an implementation of some of an architecture of system 200 for validation of policies of a smart contract on a centralized or distributed digital ledger in an ecosystem, according to some embodiments. As shown in FIG. 2, system 200 may interconnect a plurality of participants such as devices, systems, components, resources, facilities, and the like in communication with one another via network 212.

System 200 may include user 202 (also generally referred to as user computing device 202), trusted organization 204 (also generally referred to as trusted organization device 204 or trusted organization site 204), third-party organization 206, centralized or distributed ledger 208, digital wallet 210, and network 212 enabling communication between the system components for information exchange. Centralized or distributed ledger 208 may include protocol smart contract 214 and gateway smart contract 216. Network 212 may be an example or instance of network 104, details of which are provided with reference to FIG. 1A and its accompanying description. In an example, network 212 may be a secure network.

According to an implementation, user 202 may correspond to any computing device used by a user. In some embodiments, user 202 may refer to an individual or an organization that wants to carry out ecosystem transactions in a transactional protocol. User computing device 202 may be any computing device, such as a desktop computer, a laptop, a tablet computer, a mobile device, a Personal Digital Assistant (PDA) or any other computing device. In an implementation, user computing device 202 may be a device, such as client device 102 shown in FIG. 1A and FIG. 1B. User computing device 202 may be implemented by a device, such as computing device 100 shown in FIG. 1C and FIG. 1D.

According to an implementation, trusted organization 204 may correspond to a trusted organization site or device, an organization, a person, a computer-implemented algorithm, a centralized or a decentralized computing system, and the like. Trusted organization 204 may be configured to validate credentials of user 202 as well as authority within a transactional protocol to declare that user 202 is able to interact with the transactional protocol.

According to an implementation, third-party organization 206 may correspond to a third-party organization site or device, an organization, a person, a computer-implemented algorithm, a centralized or a decentralized computing system, and the like. Third-party organization 206 may be configured to validate the credentials of user 202 under a control of trusted organization 204. In an example, the credentials of user 202 may be validated by a combination of both trusted organization 204 and third-party organization 206.

According to an implementation, digital wallet 210 may correspond to a digital wallet provider site or device, a computer-implemented algorithm, a centralized or a decentralized computing system, and the like. Digital wallet 210 may store a collection of keys, such as a public and private key pair associated with user 202 that controls digital assets or funds associated with user 202. Digital wallet 210 may allow user 202 to make electronic commerce or ecosystem transactions easily and securely. A digital wallet provider may store digital wallet 210 associated with user 202 on a server computing device, such that information stored in digital wallet 210 may be easily accessed from anywhere. User 202 may access the information stored in digital wallet 210 via a website or a computer program application running on user computing device 202. In an embodiment, digital wallet 210 associated with user 202 may exist in user computing device 202. In an embodiment, digital wallet 210 may be backed up to a third-party website, application, or service.

In aspects of the present disclosure, cryptography techniques defined by PKI and by Elliptic Curve Cryptography (ECC) may be used. An asymmetric or public key cryptography may use a pair of public and private keys (public-private key pairs) to encrypt and decrypt data. The public-private key pairs are large numbers paired together, but are not identical. One key in the public-private key pair, i.e., the public key, may be shared with every participant in a transaction. The other key in the public-private key pair, i.e., the private key is kept secret. Either of the public key or private key may be used to encrypt a message, and the other key is used for decryption. All participants in a transaction may have a corresponding public-private key pair. For example, user 202 may have a public-private key pair, trusted organization 204 may have a public-private key pair, and digital wallet 210 may have a public-private key pair. In an example, a technique described by ECC may be used to generate public-private key pairs. In an embodiment, hashing may also be used. A cryptographic hash function or "hash" is a mathematical algorithm that maps data of arbitrary size to a bit string of a fixed size. It is designed to be a one-way function. The only way to recreate input data from a cryptographic hash function's output is to attempt a brute-force search of possible inputs to determine if they produce a match. An example of a hash function is SHA-256.

According to aspects of the present disclosure, trusted organization 204, third-party organization 206, and digital wallet 210 may be a server or computing device owned or managed or otherwise associated with an organization or any entity authorized thereof. According to some embodiments, trusted organization 204, third-party organization 206, and digital wallet 210 may be implemented in a variety of computing systems, such as a mainframe computer, a server, a network server, a laptop computer, a desktop computer, a notebook, a workstation, and any other computing system. In an implementation, trusted organization 204, third-party organization 206, and digital wallet 210 may be implemented in a server, such as server 106 shown in FIG. 1A. In some implementations, trusted organization 204, third-party organization 206, and digital wallet 210 may be implemented by a device, such as computing device 100 shown in FIGS. 1C and 1D. In some embodiments, trusted organization 204, third-party organization 206, and digital wallet 210 may be implemented as a part of a cluster of servers. In some embodiments, trusted organization 204, third-party organization 206, and digital wallet 210 may be implemented across a plurality of servers, thereby, tasks performed by trusted organization 204, third-party organization 206, and digital wallet 210 may be performed by the plurality of servers. These tasks may be allocated among the cluster of servers by an application, a service, a daemon, a routine, or other executable logic for task allocation.

According to an implementation, centralized or distributed ledger 208 may refer to a digital record of who-owns-what. One or more participants of system 200 may have access to centralized or distributed ledger 208. Centralized or distributed ledger 208 may be an electronic ledger that includes a list of verified transactions. For example, for digital cryptocurrencies such as Bitcoin and Ether, centralized or distributed ledger 208 is a distributed ledger referred to as a blockchain. Protocol smart contract 214 and gateway smart contract 216 may be stored in centralized or distributed ledger 208 at an address or in an account. Part or all of centralized or distributed ledger 208 may be downloaded or cached by any of the participants in system 200 for offline use. Any participant may download centralized or distributed ledger 208 on a periodic basis when they are connected online. Centralized or distributed ledger 208 may be delivered on a periodic or one-time basis to the one or more participants via electronic mail, file transfer protocol, postal mail, delivery service, or private delivery channels operated by the respective participants. In an example, the Bitcoin blockchain may be used as centralized or distributed ledger 208. In another example, a different centralized or distributed ledger 208 may be used instead of the Bitcoin blockchain. Centralized or distributed ledger 208 may be accessed from a cached offline store.

According to some embodiments, user computing device 202 may include processor 218 and memory 220. In an example, processor 218 and memory 220 of user computing device 202 may be CPU 121 and main memory 122, respectively, as shown in FIGS. 1C and 1D. User computing device 202 may also include user interface, such as a keyboard, a mouse, a touch screen, a haptic sensor, voice-based input unit, or any other appropriate user interface. It shall be appreciated that such components of user computing device 202 may correspond to similar components of computing device 100 in FIGS. 1C and 1D, such as keyboard 126, pointing device 127, I/O devices 130a-n and display devices 124a-n. User computing device 202 may also include display, such as a screen, a monitor connected to the device in any manner, or any other appropriate display. In an implementation, user computing device 202 may display received content for the user using the display and is able to accept user interaction via the user interface responsive to the displayed content.

According to some embodiments, trusted organization device 204 may include processor 222 and memory 224. For example, processor 222 and memory 224 of trusted organization device 204 may be CPU 121 and main memory 122, respectively, as shown in FIGS. 1C and 1D.

In an implementation, ecosystem transactions may be performed using protocol smart contract 214. Protocol smart contract 214 may be stored on centralized or distributed ledger 208 at an address or in an account. In an embodiment, the address or account of protocol smart contract 214 may be a known value by which a relevant protocol smart contract may be accessed. Protocol smart contract 214 represents a transactional protocol for receiving, validating, and processing an ecosystem transaction. For a given ecosystem transaction, the transactional protocol may include transaction policies (or rules) that all users transacting with that ecosystem transaction must adhere to. In an example, the ecosystem transaction may be a Decentralized Finance (DeFi) system. In another example, a transaction policy (sometimes referred to as a policy, rule, condition, guideline, or by similar such terms or combinations of terms) of the DeFi system may be that a user may not be resident of the United States to enter a transaction on the DeFi system. Transaction policies may comprise a set or aggregation of one or more conditions (including positive or required conditions and/or negative conditions or those that are required not to be present), and may be stored in any suitable manner. For example, in some implementations, a transaction policy may comprise a set of characteristics or variables (e.g. demographic information, time or date information, etc.) and corresponding thresholds or values (e.g. binary ones or zeros or yes/no identifications, minimum ages, number of days, etc.). Transaction policies may be stored in any suitable format, e.g. XML files, data arrays, flat files, etc.

In an implementation, trusted organization 204 may validate the credentials of user 202 to ensure that user 202 satisfies all the transaction policies of a transactional protocol (e.g. that conditions or variables corresponding to user 202 satisfy corresponding values or thresholds, such as an age of the user being above a threshold, or a location of the user being within a specified country). If the credentials of user 202 are verified to a predefined level of satisfaction, trusted organization 204 may issue a token. For example, in some implementations, transaction policy may itself be associated with a satisfaction threshold, and the system may determine whether a number or percentage of the conditions of the transaction policy exceeding the satisfaction threshold are satisfied (e.g. 8 out of 10 conditions satisfied to exceed a satisfaction threshold of 75%, or any other such value). In some implementations, each condition of a transaction policy may be associated with a score value, and the satisfaction threshold may comprise an aggregated score threshold. For example, a first condition, such as detecting a positive match between a fingerprint captured via a biometric scanner and a previously stored fingerprint, may have a high score; and a second condition, such as a location of the device corresponding to a predetermined location, may have a low score. Satisfying a combination of conditions may result in an aggregate score exceeding the satisfaction threshold. Tokens issued responsive to the credentials being verified may represent user 202, the transaction policies and the transactional protocol. The token may comprise an alphanumeric string, hash value, or any other such data.

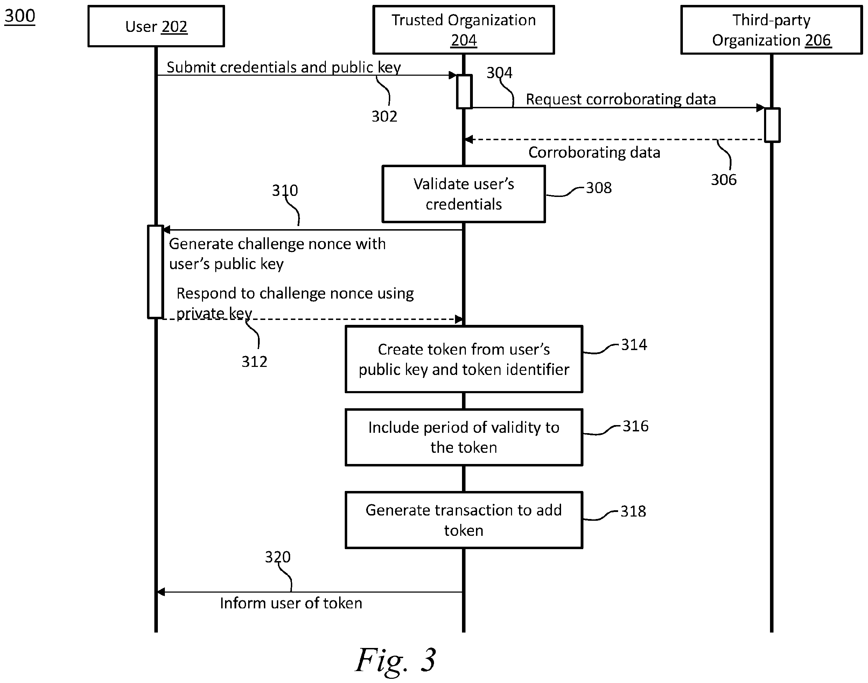

FIG. 3 depicts sequence diagram 300 for user 202 to acquire a token from trusted organization 204, according to some embodiments.

In an implementation, user 202 may generate a first public-private key pair to be associated with the token. In an embodiment, the first public-private key pair may be stored in digital wallet 210 associated with user 202.

As shown in FIG. 3, at step 302, user 202 may send a request to trusted organization 204 to verify credentials of user 202 and validate that user 202 may engage in an ecosystem transaction within a transactional protocol. The request may include the credentials to be verified and a cryptographically secure identity.

In an embodiment, the cryptographically secure identity is a first public key in the first public-private key pair to which user 202 can prove ownership of a first private key in the first public-private key pair. In an embodiment, the credentials may be used to determine that user 202 complies, in part or in totality, with transaction policies defined by the transactional protocol. Examples of the credentials may include, but are not limited to, passport information, residency permit information, national identity card information, driver's license information, social security number, educational certificates, birth certificate, marriage certificate, email contact details, cell phone contact details, proof of residential address, a court document or a legal document, a deed, and proof of employment. The credentials required to determine compliance may vary depending on the type of ecosystem transaction and/or transaction policies defined by various transactional protocols. The credentials may be provided in any suitable format, including as XML data, concatenated data strings, parameter-value pairs, text, or any other such format.

At step 304, trusted organization 204 may communicate a request for corroborating data to one or more third-party organizations 206.

In an embodiment, trusted organization 204 may receive a part of or all the credentials from one or more sources of information other than receiving from user 202. Such one or more sources of information may be third-party organization 206 or other organizations in communication with third-party organization 206. The corroborating data may include a part of or all the credentials of the user and any additional or supporting information that may be required to determine that user 202 complies, in part or in totality, with transaction policies defined by the transactional protocol. In an embodiment, trusted organization 204 may not send the request for the corroborating data (step 304) to third-party organization 206, when trusted organization 204 is capable of independently determining that user 202 complies with transaction policies defined by the transactional protocol, i.e., trusted organization 204 does not require the corroborating data to determine that user 202 complies with transaction policies.

At step 306, third-party organization 206 may communicate the corroborating data to trusted organization 204.

In an embodiment, trusted organization 204 may generate a second public-private key pair to be associated with a token. The second public-private key pair may represent trusted organization 204 and the second public-private key pair may be common for all tokens issued by trusted organization 204.

At step 308, trusted organization 204 may validate the credentials of user 202. Trusted organization 204 may use one or more validation steps to validate the credentials of user 202. In an example, trusted organization 204 may text, email, call, or message user 202 using contact details such as the email contact details, and the cell phone contact details provided by user 202 to continue with or complete the validation of the credentials. Trusted organization 204 may use a preferred communication channel requested by user 202. In another example, trusted organization 204 may send a physical postcard or mail to the residential address provided by user 202. In an embodiment, trusted organization 204 may require user 202 to share a code, provided on the text, email, call, message, physical postcard, or mail, with trusted organization 204 to continue with or complete the validation of the credentials. In another example, trusted organization 204 may require user 202 to prove that user 202 owns or controls something by providing a verifiable title or a password. In another example, trusted organization 204 may provide information to user 202 on one communication channel of user 202 and require that user 202 provides the same information to trusted organization 204 on another communication channel of the user 202 to continue with or complete the validation of the credentials. In an example, trusted organization 204 may use a Know Your Customer (KYC) methodology to validate the credentials of user 202. In another example, trusted organization 204 may use a Know Your Business (KYB) methodology to validate the credentials of user 202.

In an embodiment, the validation of the credentials may be carried out by trusted organization 204 or by another party under the control of trusted organization 204, such as third-party organization 206, or by a combination of both.

In an example, and where user 202 is an individual, the transaction policies required by the transactional protocol may be verified by a KYC methodology. In another example, and where user 202 is an organization, the transaction policies required by the transactional protocol may be verified by a KYB methodology. As discussed above, validating transaction policies may comprise evaluating a Boolean expression or values for a series or set of conditionals (e.g. determining if characteristics or values of the credentials match corresponding values or thresholds). In some implementations, validating transaction policies may comprise determining whether a number or percentage of credentials have been validated or match the policies above a satisfaction threshold, or whether an aggregate score for the credentials or characteristics exceeds a satisfaction threshold.

In an embodiment, trusted organization 204 may verify that user 202 controls the first public key included in the request received (step 302) from user 202. To verify that that user 202 controls the first public key, trusted organization 204 may generate a challenge cryptographic nonce. In an embodiment, the challenge cryptographic nonce may be generated by a cryptographic nonce generation algorithm and may include a timestamp. In an embodiment, the challenge cryptographic nonce may be generated through repeated hashing of a random or pseudo-random value. The challenge cryptographic nonce may be generated using a software or using a dedicated hardware circuit that supports encryption or using a combination of both.

At step 310, trusted organization 204 may generate and send the challenge cryptographic nonce to user 202. In response to receipt of the challenge cryptographic nonce, user 202 may sign the challenge cryptographic nonce using a cryptographical signing protocol and the first private key corresponding to the first public key being verified.

At step 312, user 202 sends the signed challenge cryptographic nonce to trusted organization 204. If trusted organization 204 determines that the first private key used to sign the challenge cryptographic nonce corresponds to the first public key being verified, trusted organization 204 may verify that user 202 has current control over the first public key in the first public-private key pair.

When the credentials of user 202 are verified to a predefined level of satisfaction (e.g. based on number of verified credentials, percentage of verified credentials, score of verified credentials, etc., as discussed above), user 202 may be considered as abiding by the transaction policies defined by the transactional protocol and trusted organization 204 may validate that the credentials of user 202 satisfy the transaction policies and that the credentials are legitimate.

At step 314, trusted organization 204 may create a token including the first public key associated with user 202 and a token identifier. In an embodiment, the token identifier may represent that user has presented credentials that comply with transactional policies corresponding to the transactional protocol. In an embodiment, the token identifier may include an identifier representing the issuing organization, i.e., trusted organization 204.

At step 316, trusted organization 204 may include a period of validity to the token. The period of validity represents a duration for which the token is valid. Trusted organization 204 may determine the period of validity over which user 202 may use the transactional protocol without further verification or validation. During the period of validity of the token, user 202 may be allowed to make ecosystem transactions that lie within the transactional protocol for which the token is created without further validation of the credentials of user 202. In an example, the period of validity may not be limited. In an example, during the period of validity, user 202 may be allowed to make a maximum of a predetermined number of ecosystem transactions that lie within the transactional protocol for which the token is created.

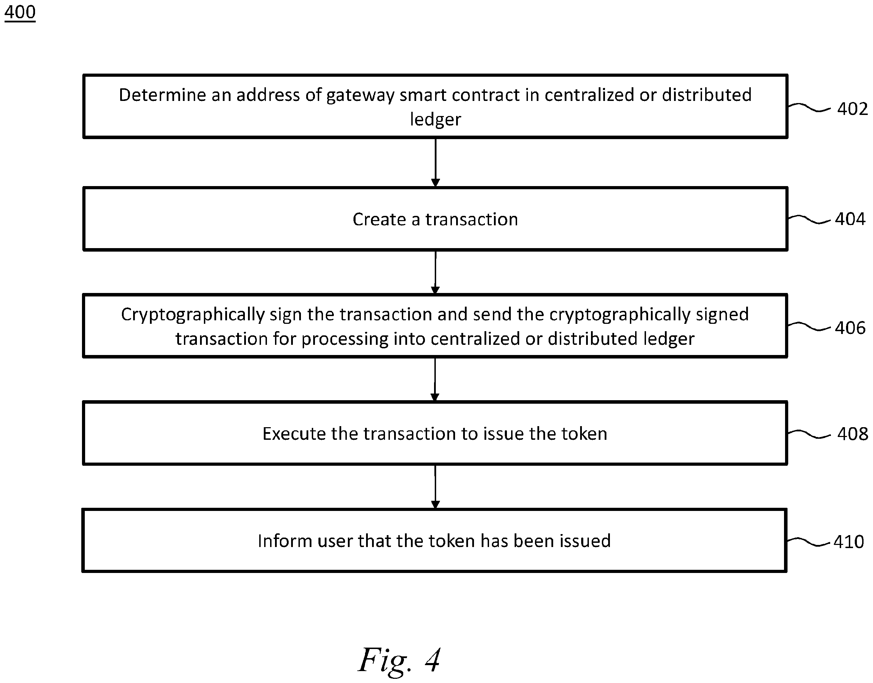

At step 318, trusted organization 204 may generate a transaction to issue the token. Trusted organization 204 may associate the token with both the first public key of user 202 and the second public key of trusted organization 204 and then may issue the token. Issuing a token is described in further detail with reference to FIG. 4.

At step 320, trusted organization 204 may inform user 202 of the token (e.g. by transmitting an identifier, pushing a notification to a device, providing a receipt, etc.).

According to aspects of the present disclosure, a token may be a representation of information which may include one or more of: a) an identifier associated uniquely to transaction policies defined by a transactional protocol represented by that token, b) a status of the token such as currently valid, suspended, and revoked, c) a period of validity for which the status of the token is valid, d) an identifier representing organization that issued the token, i.e., trusted organization 204 in the present disclosure.

In an embodiment, the token may be represented by data stored in gateway smart contract 216. In an example, gateway smart contract 216 may be stateful, i.e., contain data representing many users. In another example, gateway smart contract 216 may be stateless, i.e., there may be a plurality of identical gateway smart contracts 216 that each include data representing a single user. In all cases, identity of user 202 is the first public key and is provided alongside or as part of the credentials of user 202. Prior to an issue of the token, trusted organization 204 may verify that user 202 has control of the first public key and verify the validity of the credentials of user 202. The token may be associated uniquely with the first public key of the user.

In an example, address of gateway smart contract 216 may be a predetermined address associated with the transaction policies that gateway smart contract 216 provides the token to represent. In another example, the address of gateway smart contract 216 may be a predetermined address associated with a management of tokens. In another example, the address of gateway smart contract 216 may be determined by hashing information provided by user 202 to trusted organization 204 that issues the token. The information that is hashed to determine the address of gateway smart contract 216 may include the first public key of user 202.

An example of stateful gateway smart contract 216 in pseudocode may be:
Gateway Contract()
State:
   GatewayTokenTable
Functions:
   addToken(walletAddress)
   revokeToken(walletAddress)
   toggleTokenFrozen(walletAddress)
where GatewayTokenTable is the "state" of the contract and may comprise multiple rows representing different users with the following columns:
WalletAddress (address of digital wallet 210 of user 202 to which the token has been issued)
Trusted Organization (identifier representing trusted organization 204 that issued the token)
TokenState (status of the token)
TokenIssuedAt (date and/or time at which the token is issued)
TokenExpiresAt (date and/or time at which the token expires, i.e., no longer valid)

In an example, the state of gateway smart contract 216 (for example, GatewayTokenTable) may be public, and read-only outside gateway smart contract 216. Only gateway smart contract 216 may edit the state but anyone can read the state (for example, to check if a particular user's digital wallet has a token). In an example, gateway smart contract 216 may govern who has permission to modify its state, i.e., who is permitted to call the functions associated with gateway smart contract 216. In an example, stateful gateway smart contract 216 may be used with the Ethereum^{®} blockchain.

An example of stateless gateway smart contract 216 in a pseudocode may be:
Gateway Contract()
Functions:
   addToken(walletAddress):TokenAccount
   revokeToken(TokenAccount)
   toggleTokenFrozen(TokenAccount)
where TokenAccount may be a class, an instance of which represents a single token. addToken may create a TokenAccount and may return it as the output. Each other function may take an instance TokenAccount as an input.

Gateway smart contract 216 is a stateless gateway smart contract 216 as there is no data within gateway smart contract 216. In an example, to determine whether a user holds a token, the user may provide details of a TokenAccount that holds or represents the token, and that TokenAccount may be queried to verify that the token is valid. Gateway smart contract 216 in a stateless model may govern who can generate TokenAccounts but may not store a list of all TokenAccounts. In an example, stateless gateway smart contract 216 may be used with the Solana^{™} blockchain.

FIG. 4 depicts flowchart 400 for issuing a token, according to some embodiments.

As shown in FIG. 4, at step 402, trusted organization 204 may determine an address in centralized or distributed ledger 208 of gateway smart contract 216 which manages tokens for transaction policies. In an embodiment, the address may be a predetermined address. In another embodiment, the address may be a random address. In another embodiment, the address may be determined by hashing information provided by user 202. For example, in one implementation, a user identifier (e.g. account name or other identifier) may be hashed to generate an alphanumeric code that may be used as an address or index to the ledger. Because the address or index may be more difficult to remember than the user identifier, such implementations may provide an easy method to dynamically regenerate the address when needed by applying the same hash algorithm to the user identifier. In some examples, a gateway smart contract 216 may be used that can be either a stateless or a stateful gateway smart contract model.

At step 404, trusted organization 204 may create a transaction that includes one or more of: the first public key of user 202, contact detail(s) of user 202, the period of validity of the token to be issued, the second public key of trusted organization 204, an identifier representing type of the token (i.e., the identifier associated uniquely to the transaction policies defined by the transactional protocol represented by the token).

At step 406, trusted organization 204 may cryptographically sign the transaction and send the cryptographically signed transaction for processing into centralized or distributed ledger 208.

At step 408, gateway smart contract 216, which manages tokens for transaction policies may execute the transaction to issue the token.

At step 410, on confirmation of issuance of the token, trusted organization 204 may inform user 202 that the token has been issued. In an embodiment, gateway smart contract 216 may inform user 202 that the token has been issued via the contact detail(s) of user 202.

According to aspects of the present disclosure, centralized or distributed ledger 208 may be a blockchain, and the issuance of the token may be confirmed if the transaction executed by gateway smart contract 216 is confirmed by centralized or distributed ledger 208. Centralized or distributed ledger 208 may be replicated among a plurality of nodes in a peer-to-peer network.

In an embodiment, centralized or distributed ledger 208 may confirm the transaction when one or more conditions are met. The one or more conditions may include: a) a validator/miner node of the plurality of nodes takes the transaction and adds it to a block in the blockchain, b) the validator/miner node broadcasts the block to the rest of the plurality of nodes in the blockchain, c) sufficient or a predetermined amount of time has passed, and d) sufficient or a predetermined number of new blocks are added to the blockchain after this block. After the predetermined amount of time has passed or the predetermined number of new blocks are added, it may be highly unlikely that the blockchain is later changed to exclude the transaction.

In an embodiment, trusted organization 204 may submit the transaction to the blockchain, via an Application Programming Interface (API) that broadcasts the transaction to a known set of nodes, i.e., the plurality of nodes. Trusted organization 204 then waits for the API to report that the transaction has been added to the blockchain and has a predetermined number of confirmations. In an embodiment, the predetermined number of confirmations may be greater than or equal to half of the number of the plurality of nodes. In an implementation, the report may take a few seconds, a few minutes, or a few hours depending on the blockchain.

According to aspects of the present disclosure, after a token has been issued by trusted organization 204, the token may be further processed by trusted organization 204. The further processing may change a state of the token. Trusted organization 204 may expire, freeze, thaw, revoke, reissue, and renew the token. To change the state of the token, trusted organization 204 may send a transaction that details required processing to gateway smart contract 216 associated with management of the tokens. The transaction may contain details of trusted organization 204. In an embodiment, the details of trusted organization 204 is the second public key of trusted organization 204. In examples, and where it is appropriate, the transaction may include a validity time (or a period of validity) for the new state of the token. The transaction is cryptographically signed by trusted organization 204 and sent for processing to centralized or distributed ledger 208.

In an embodiment, trusted organization 204 may expire the token. In an example, to expire the token, trusted organization 204 may set the period of validity to zero.

In an embodiment, trusted organization 204 may freeze the token. In an example, trusted organization 204 may specify a duration of time for which the token is frozen. In another example, a frozen token remains frozen until it is reactivated (or thawed).

In an embodiment, trusted organization 204 may thaw the token which has been frozen. In an example, trusted organization 204 may thaw the token without providing any other information. In another example, the credentials of user 202 that owns the token are validated again prior to thawing the token.

In an embodiment, trusted organization 204 may revoke the token. In an example, the token may be removed completely. In another example, a revoked token may remain, but the revoked token is marked as revoked. In an example, the revoked token may be reissued by trusted organization 204 after the credentials of user 202 have undergone a complete validation. In another example, the revoked token may not be reissued and the first public-private key pair of user 202 associated with the token may not be issued the same token again.

In an embodiment, trusted organization 204 may reissue a token that has been revoked. The credentials of user 202 that owns the token may be validated again prior to reissuing the token.

In an embodiment, trusted organization 204 may renew a token that has expired. In an example, the token may be renewed by a complete validation of the credentials of user 202. In another example, trusted organization 204 may not require any new credentials and may renew the token.

In an embodiment, trusted organization 204 may freeze or revoke a token if an ecosystem transaction is made where one or more of the transaction policies that are represented by the token are not met. For example, if one of the transaction policies require the ecosystem transaction to be initiated outside of the United States but IP address of a computing device on which the ecosystem transaction is initiated shows that the computing device is within the United States, trusted organization 204 may freeze or revoke the token. Once the token is frozen or revoked, a new validation process with trusted organization 204 may be required to thaw or renew the token. In another example, the token may be frozen for a period of time and the token may be thawed after that period of time has expired.

In an embodiment, user 202 may correspond to an organization and the organization provides the credentials to trusted organization 204 for validation against the transaction policies of the transactional protocol. In an example, a process that validates the credentials of the organization is Know Your Business (KYB) methodology. In such an embodiment, digital wallet 210 may be associated with the organization.

In an embodiment, digital wallet 210 may be source of an ecosystem transaction and there may not be any check or restriction required for an individual that controls digital wallet 210.

In another embodiment, an ecosystem transaction may require proving that not only the organization associated with digital wallet 210 has a token but also an individual using or controlling digital wallet 210 is also validated against the transaction policies of the transactional protocol. In such an embodiment, the individual may also provide credentials to trusted organization 204 and trusted organization 204 may validate the credentials of the individual as described with reference to FIG. 3. Trusted organization 204 may then issue a token to the individual associated with a public key provided by the individual as part of the credentials. In an example, a public-private key pair may be stored in digital wallet 210 and may be used to validate the ecosystem transaction. In another example, user 202 may be required to provide both an organization token and an individual token as part of the ecosystem transaction. In a further example, a new gateway smart contract 216 may be implemented, which checks the validity of any number of tokens provided as input (for example, according to a set of policies, all tokens must be valid, or M-from-N tokens must be valid) and generates as an output, a single token which may form an input to protocol smart contract 214.

In an embodiment, the organization may be permitted to issue digital wallets at its own discretion (for example., to individuals authorized by the organization). In such an embodiment, a proof of ownership of a valid token by the organization may alone be sufficient evidence for trusted organization 204 to issue an identical token to the individual. Alternatively, in such an embodiment, the individual may be required to provide credentials to be validated by trusted organization 204 along with the token already issued by trusted organization 204. If the credentials are validated by trusted organization 204 against the transaction policies, a token will be issued to the individual by trusted organization 204. In an embodiment, the issued token may be associated with the individual's digital wallet as issued by the organization.

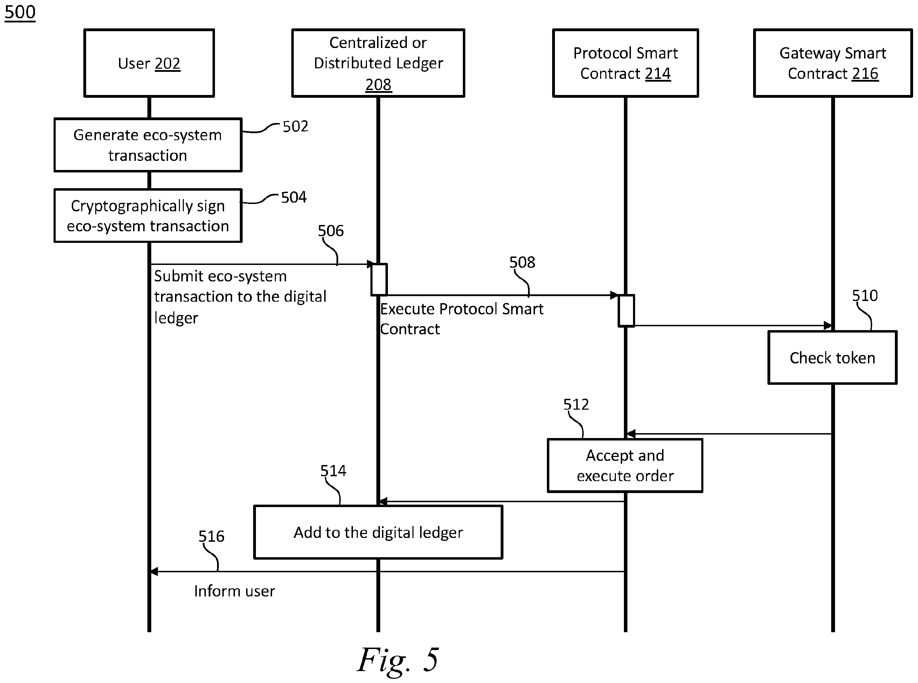

FIG. 5 depicts sequence diagram 500 for user 202 to engage in the ecosystem transaction, according to some embodiments.

Once the token is issued, user 202 may engage with the transactional protocol and initiate ecosystem transactions associated with the transactional protocol.

At step 502, user 202 may generate the ecosystem transaction within the transactional protocol. The ecosystem transaction may refer to a set of information that includes one or more of: the transactional protocol, an order, a means to pay for the order, and the token that represents user 202 complies with the transaction policies required by the transactional protocol.

In an example, the generated ecosystem transaction may include a set of information. In another example, the set of information may be stored elsewhere, for example, in gateway smart contract 216 in centralized or distributed ledger 208, and the generated ecosystem transaction provides reference to the set of information. In another example, the generated ecosystem transaction may include a part of the set of information and provide reference to remaining part of the set of information.

In an embodiment, the generated ecosystem transaction may not directly provide a reference to the token. In such an embodiment, the generated ecosystem transaction may refer to an identifier associated with user 202. For example, the generated ecosystem transaction may refer to the first public key stored in digital wallet 210 associated with user 202. The first public key may be used to determine from the gateway smart contract 216 that user 202 holds the token for the transactional protocol.

In an embodiment, the transactional protocol, to which the ecosystem transaction is directed to, may be represented by protocol smart contract 214. In such an embodiment, protocol smart contract 214 may be a stateful protocol smart contract.

In an embodiment, the transactional protocol may be represented by the token and protocol smart contract 214 to which the ecosystem transaction is directed to. In such an embodiment, protocol smart contract 214 may be a stateless protocol smart contract.

In an embodiment, centralized or distributed ledger 208 may store a plurality of protocol smart contracts having the same or similar functionality but representing different transactional protocols.

At step 504, user 202 may cryptographically sign the ecosystem transaction using a cryptographic signature and send the cryptographically signed ecosystem transaction for processing to centralized or distributed ledger 208. In an embodiment, the ecosystem transaction is signed with the same private key that is associated with the token. In an embodiment, this private key is the first private key of user 202.

In an embodiment, the cryptographic signature (or a digital signature) is used to prove that a party, i.e., user 202, has generated a piece of digital information. The cryptographic signature is achieved within PKI by the party encrypting the piece of digital information with a private key associated with the party. The encrypted piece of digital information may be decrypted by a corresponding public key to recover the piece of digital information. Since the private key is known only by the party and the public key is known to every other participant involved in a transaction, the transaction is proved reliable to everyone that the party has generated the piece of digital information. In an embodiment, Elliptic Curve Digital Signature Algorithm (ECDSA) may be used to realize cryptographic signatures.

At step 506, user 202 may submit the cryptographically signed ecosystem transaction. The cryptographically signed ecosystem transaction may be received by a validating node of the plurality of nodes having replicated or having access to centralized or distributed ledger 208. The validating node may check the cryptographical signature of the ecosystem transaction for validity. In an embodiment, validity is confirmed if the validating node asserts, by use of the first public key of user 202, that the first private key of user 202 was used to sign the ecosystem transaction and that the ecosystem transaction was not tampered with.

At step 508, protocol smart contract 214 referenced by the ecosystem transaction may be executed.

At step 510, the token may be validated by gateway smart contract 216. The token may be validated to check if the token is present (or exists), the token belongs to user 202, the token is currently valid, and the token represents the transaction policies required for the transactional protocol. In an embodiment, ownership of the token is validated by checking that the token is associated with the first public key of user 202 (e.g. by decrypting the token with the public key and verifying that the decrypted token comprises a validating code or other expected identifier, or by any other similar methods).

At step 512, the ecosystem transaction may be accepted by protocol smart contract 214 and the order included in the ecosystem transaction may be executed.

At step 514, the ecosystem transaction may be added to centralized or distributed ledger 208.

At step 516, user 202 may be informed that the ecosystem transaction has been executed and corresponding entry has been added to centralized or distributed ledger 208.

In an embodiment, a first token may represent a first set of transaction policies, and a second token may represent a second set of transaction policies. The transactional protocol may require evidence that compliance for both the first set of transaction policies and the second set of transaction policies have been proven. This may be carried out by an intermediate gateway smart contract or other processing which accepts the first token and the second token and validates that both are valid. The intermediate gateway smart contract may then issue a temporary third token that represents a combination of the first set of transaction policies and the second set of transaction policies. In an embodiment, there may be any number of sets of transaction policies and an intermediate process may combine those sets of transaction policies in any number of ways. In an embodiment, the intermediate process may be carried out by gateway smart contract 216.

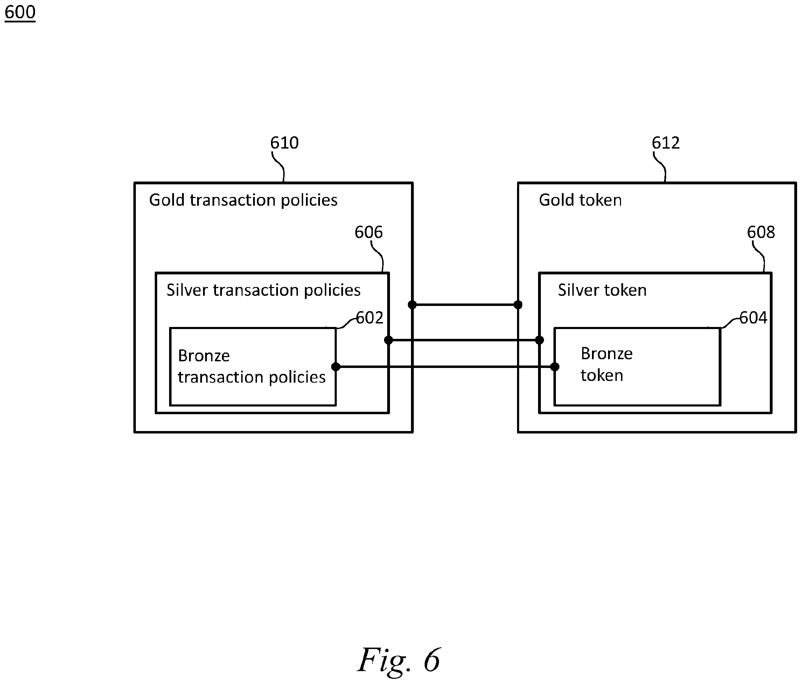

FIG. 6 depicts tier structure 600 of a hierarchical token, according to some embodiments.

In an embodiment, the transaction policies may depend on variable inputs. For example, the transaction policies may be more stringent for ecosystem transactions of higher values. A token may represent a hierarchy of the transaction policies that may start with less stringent transaction policies and may grow in stringency.

A token may represent all transaction policies up to a level in the hierarchy. As shown in FIG. 6, various levels of hierarchies may be represented for transaction policies and their corresponding tokens. Bronze transaction policies 602 may correspond to bronze token 604, silver transaction policies 606 may correspond to silver token 608, and gold transaction policies 610 may correspond to gold token 612. Bronze token 604 may represent all transaction policies of ecosystem transactions associated only with bronze transaction policies 602. Silver token 608 may represent all transaction policies of ecosystem transactions associated with both bronze transaction policies 602 and silver transaction policies 606 and may be presented as evidence to execute these ecosystem transactions. However, silver token 608 may not allow ecosystem transactions associated with gold transaction policies 610 to execute as credentials that correspond to gold transaction policies 610 may not have been validated by trusted organization 204. Further, gold token 612 may represent all transaction policies of ecosystem transactions associated with bronze transaction policies 602, silver transaction policies 606, and gold transaction policies 610 and may be presented as evidence to execute these ecosystem transactions.

In an embodiment, a trusted organization may only have authority to issue a token up to a level of the hierarchy (for example, up to an including "silver" level) and a more trusted organization may be required to issue a token for a higher level of the hierarchy.

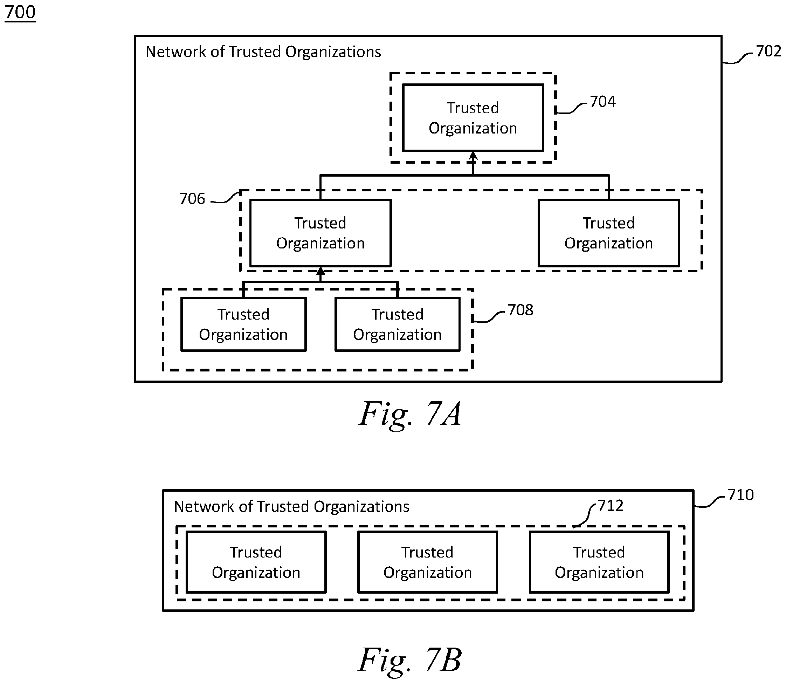

FIGS. 7A and 7B depict a network of trusted organizations, according to some embodiments.

Trusted organizations may have a hierarchical structure which may allow one trusted organization to make changes to tokens issued by another trusted organization. In an embodiment, a trusted organization must be higher in the hierarchy to make changes to tokens issued by another trusted organization. In another embodiment, any trusted organization which is part of a network of trusted organizations may make changes to token issued by any other trusted organization in the network of trusted organizations.

FIG. 7A depicts hierarchical structure 702 of a network of trusted organizations. Hierarchical structure 702 of the network of trusted organizations may include first hierarchy 704 of trusted organizations, second hierarchy 706 of trusted organizations, and third hierarchy 708 of trusted organizations. Trusted organization in first hierarchy 704 may make changes to tokens issued by trusted organizations in all three hierarchies, i.e., first hierarchy 704, second hierarchy 706, and third hierarchy 708. Trusted organizations in second hierarchy 706 may make changes to tokens issued by trusted organizations only in second hierarchy 706 and third hierarchy 708. Trusted organizations in third hierarchy 708 may make changes to tokens issued by trusted organizations only in third hierarchy 708.

FIG. 7B depicts flat hierarchy structure 710 of a network of trusted organizations. Flat hierarchy structure 710 of the network of trusted organizations may include only single hierarchy 712 of trusted organizations 204. A trusted organization in single hierarchy 712 may make changes to tokens issued by any other trusted organization in single hierarchy 712.

According to aspects of the present disclosure, any trusted organization 204 may have a public-private key pair which allows that trusted organization 204 to issue and make changes to tokens. A public key of trusted organization 204 is associated with a token issued by that trusted organization 204. In an embodiment, gateway smart contract 216 may dedicatedly manage all the tokens, and access to change details stored by gateway smart contract 216 may be limited only to trusted organization(s) 204 which hold the correct public key.

Gateway smart contract 216 may store a database of public keys that have authority to make changes, and it may also store a hierarchy associated with each public key. In an example, a transaction to make a change to an issued token may be signed by the private key of trusted organization 204, and the associated public key is searched in the database of public keys within gateway smart contract 216. If the public key is found in the database of public keys and is allowed to make the change, gateway smart contract 216 may execute the change to the issued token, otherwise the transaction is blocked.

In an embodiment, if a second trusted organization makes a change to a token issued by a first trusted organization, ownership of the token may be changed to the second trusted organization. In another embodiment, the ownership may be left unchanged.

In an embodiment, a single public-private key pair may be generated and all trusted organizations in a network of trusted organizations may share the same public-private key pair.

In an embodiment, data associated with issuance of tokens may be required by multiple centralized or distributed ledgers. According to aspects of the present disclosure, the tokens may be maintained (or stored) on the multiple centralized or distributed digital ledgers. In an embodiment, when trusted organization 204 issues a token, trusted organization 204 may execute the process once for each of the multiple centralized or distributed ledgers. Further, if trusted organization 204 is required to process the token (for example, to change the state of the token), operations associated with the processing of the token are executed once for each of the multiple centralized or distributed ledgers.

In an embodiment, gateway smart contract 216 which executes on a first centralized or distributed ledger may publish a record of tokens held on the first centralized or distributed ledger to each of the multiple centralized or distributed digital ledgers. The publication may occur each time a token is issued or a state of token changes.

In an embodiment, a record of tokens may be held and maintained exclusively on a first centralized or distributed ledger and gateway smart contract 216, which executes on a second centralized or distributed ledger may make a request to the first centralized or distributed ledger to determine presence and status of a token. The first centralized or distributed ledger may respond with a transaction on the second centralized or distributed ledger to report the requested presence and status of the token.

In an embodiment, a platform that manages ecosystem transactions using centralized or distributed ledger 208 may detect, at the time of initiation of an ecosystem transaction, that user 202 does not hold a valid token for the ecosystem transaction and may redirect user 202 to trusted organization 204. Once validation of credentials of user 202 is carried out, user 202 may be redirected back to the platform managing the ecosystem transactions.

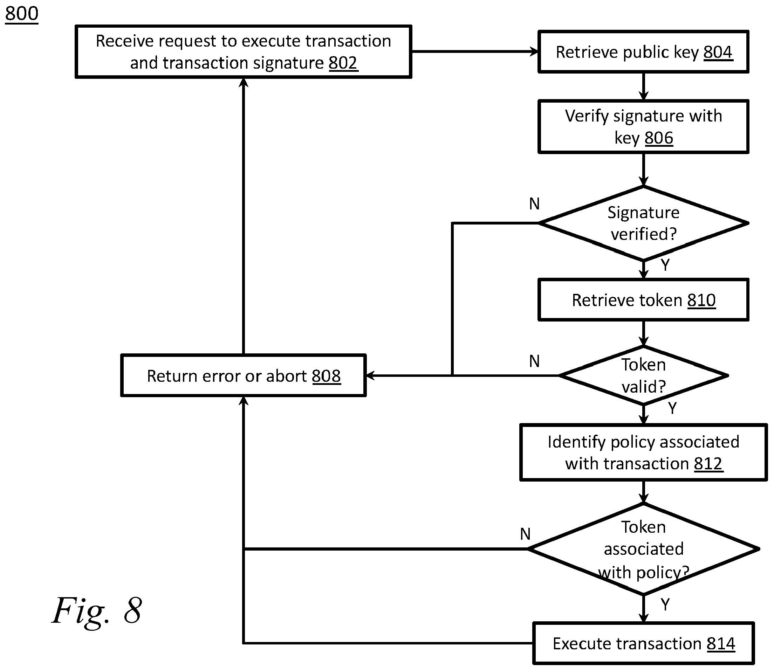

FIG. 8 depicts flowchart 800 for policy-validating transactions using a centralized or distributed ledger, according to some embodiments. In a brief overview of an implementation of flowchart 800, at step 802, a request may be received to execute an ecosystem transaction and a transaction signature generated with a private key of a computing device associated with user 202.

In some implementations, step 802 includes receiving a request to execute an ecosystem transaction and a transaction signature generated with a private key of a computing device associated with user 202. According to an implementation, a first computing device in communication with centralized or distributed ledger 208 may receive the request and the transaction signature from the computing device associated with user 202. The ecosystem transaction may correspond to a token associated with the computing device of user 202, and the ecosystem transaction may be subject to a first transaction policy of a set of one or more transaction policies. In an embodiment, the transaction may be identified as subject to the first transaction policy of the set of one or more transaction policies in response to one or more of the transaction, the token, and characteristics of the first computing device.

In some implementations, at step 804, a public key of the computing device associated with user 202 may be retrieved from a database and/or received from the computing device of the user (e.g. along with the request at step 802, in some implementations).

In some implementations, at step 806, the transaction signature may be verified with the public key (e.g. by decrypting the signature and matching the result to the transaction request, or other similar methods). In some implementations, step 806 includes determining that the transaction signature corresponds to the request to execute the ecosystem transaction. In an implementation, the first computing device uses a public key of the computing device associated with user 202 to determine that the transaction signature corresponds to the request to execute the ecosystem transaction.

If the signature is not verified, then at step 808, the method may abort and/or may report an error (e.g. to the computing device of the user, to an administrator, to another computing device or server, by sending a signal to trigger an alarm, etc.). If the signature is verified, then in some implementations, at step 810, the token associated with the computing device of the user may be retrieved from the centralized or distributed ledger 208. In some implementations, step 810 includes retrieving the token associated with the computing device of user 202 in response to the determination that the signature is verified. According to an implementation, the first computing device may retrieve the token from centralized or distributed ledger 208.

In an embodiment, the token may identify the first transaction policy and the token may comprise a status identifier. In an embodiment, the token may comprise an identifier indicating a validity period of the token.

In an embodiment, the set of one or more transaction polices may comprise a plurality of transaction policies in a parent-child hierarchy. The first transaction policy may be a child of a second transaction policy and the token may be further associated with the second transaction policy.

The token may be generated by a computing device and stored in centralized or distributed ledger 208. The computing device generating the token may comprise a device of a user, a device of a third-party identity verifier, a device maintaining the centralized or distributed ledger, or any other such device. For example, in some embodiments, the transacting computing device (e.g. the computing device receiving a request to execute the ecosystem transaction and executing the transaction in response to determining that an associated token and/or policy are valid) may or may not be the computing device that issued the associated token and/or recorded the token on a centralized or distributed ledger. Accordingly, in various implementations, different steps of the methods discussed herein may be performed by the same device or different devices providing distributed operations. In an embodiment, the token may be stored in centralized or distributed ledger 208 in response to validated credentials of user 202 complying with the first transaction policy. In an embodiment, the token may be stored in centralized or distributed ledger 208 in response to validation of a cryptographic nonce using the public and private key of the computing device of user 202.

The token may be generated by one of the first computing device and a second computing device and stored in centralized or distributed ledger 208. In an embodiment, the token may be stored in centralized or distributed ledger 208 in response to validated credentials of user 202 complying with the first transaction policy. In an embodiment, the token may be stored in centralized or distributed ledger 208 in response to validation of a cryptographic nonce using the public and private key of the computing device of user 202.

In some implementations, the token may be verified for validity (e.g. by determining that the token has not expired, according to an expiration time of the token recorded in the ledger; by determining that the token has a cryptographic signature corresponding to a public key of a token generator or validator; by determining that a transaction invalidating the token has not been recorded to the ledger; and/or by any other similar methods). If the token is not valid, then the method may abort and/or return errors at step 808 as discussed above. If the token is valid, in some implementations, at step 812, a policy associated with the transaction may be identified. For example, in some implementations, a database associating transactions and corresponding policies may be accessed and policies associated with the transaction of the request may be retrieved. In other implementations, one or more policies which are satisfied by the credentials associated with the token may be recorded to the ledger along with or as part of the token, and may be identified at step 812 to determine if the one or more policies includes a policy associated with the transaction of the transaction request.

In some implementations, step 812 includes determining that the token is associated with the first transaction policy and that the token is valid. In an implementation, the first computing device may determine that the token is associated with the first transaction policy and that the token is valid.
If the token is associated with the policy (or if the credentials used to generate or validate the token comply with the requirements or conditions of the policy), and the token is valid, then at step 814, responsive to the determinations, the transaction may be executed. Step 814 includes executing the transaction by the first computing device in response to the determination that the token is associated with the first transaction policy and that the token is valid. In an embodiment, to execute the transaction, the first computing device may direct a second computing device to provide access to a good or service to user 202.

While various embodiments of the methods and systems have been described, these embodiments are illustrative and in no way limit the scope of the described methods or systems. Those having skill in the relevant art can effect changes to form and details of the described methods and systems without departing from the broadest scope of the described methods and systems. Thus, the scope of the methods and systems described herein should not be limited by any of the illustrative embodiments and should be defined in accordance with the accompanying claims and their equivalents.

## Claims

1. A method for policy-validated transactions using a centralized or distributed ledger, comprising:
receiving, by a first computing device from a second computing device associated with a user, credentials of the user;
determine, by the first computing device, that the credentials comply with a first policy of a set of one or more policies;
responsive to the determination, generating, by the first computing device, a token associated with the second computing device; and
storing, by the first computing device, the generated token in a centralized or distributed ledger;
wherein the token is subsequently retrieved from the centralized or distributed ledger by one of the first computing device and a third computing device responsive to a request from the second computing device to execute a transaction subject to the first policy; and
wherein one of the first computing device and a third computing device is configured to execute the transaction, responsive to the token being valid upon retrieval.

2. The method of claim 1, wherein the token identifies the first policy.

3. The method of any preceding claim, wherein the token comprises a status identifier.

4. The method of any preceding claim, wherein the token comprises an identifier of a validity period.

5. The method of claim 4, further comprising determining, by the first computing device, whether the validity period has expired.

6. The method of any preceding claim, further comprising validating, by the first computing device, the credentials of the user.

7. The method of any preceding claim, further comprising validating, by the first computing device, an identity of the second computing device via exchange of a cryptographic nonce and a public key of the second computing device.

8. The method of any preceding claim, wherein the set of one or more polices comprise a plurality of policies in a parent-child hierarchy;
wherein the first policy is a child of a second policy; and
wherein the token is further associated with the second policy.

9. The method of any preceding claim, wherein the transaction is subject to the first policy of the set of one or more policies responsive to one or more of the transaction, the token, and characteristics of the second computing device.

10. The method of any preceding claim, further comprising directing the third computing device, by the first computing device responsive to the token being valid upon retrieval, to provide access to a good or service to the user.

11. A non-transitory computer readable medium comprising instructions that, when executed by the processor of a computing device, cause the device to perform the method of any of claims 1 through 10.

12. A system, comprising:
a first computing device comprising a network interface in communication with a second computing device associated with a user, and a processor configured to perform the method of any of claims 1 through 10.
